# EUROPEAN PATENT APPLICATION

(11) **EP 4 213 268 A1**
(43) Date of publication of application: **19.07.2023**
(21) Application number: 21866299.7
(22) Date of filing: 17.05.2021
(51) Int. Cl.: H01M 10/0569, H01M 4/134, H01M 10/052, H01M 10/0568

(54) **LITHIUM SECONDARY BATTERY**

(30) Priority: 14.09.2020 WO PCT/JP2020/034710
(71) Applicant: TERAWATT TECHNOLOGY K.K., Yokohama-shi, Kanagawa 226-0026 (JP)
(72) Inventor: ARAI, Juichi, Yokohama-shi, Kanagawa 226-0026 (JP); OGATA, Ken, Yokohama-shi, Kanagawa 226-0026 (JP)
(74) Representative: Mewburn Ellis LLP
(86) International application number: PCT/JP2021/018575
(87) International publication number: WO 2022/054338

(57) **Abstract**

The present invention provides a lithium secondary battery that has high energy density and excellent cycle characteristics or safety. The present invention relates to a lithium secondary battery including a positive electrode, a negative electrode that is free of a negative electrode active material, and an electrolytic solution, in which the electrolytic solution contains a lithium salt, a fluorine compound having a monovalent group represented by Formula (A) or Formula (B), and a chain-like ether compound that is free of a fluorine atom and has a branched chain.

## Description

### Technical Field

The present invention relates to a lithium secondary battery.

### Background Art

In recent years, techniques for converting natural energy such as solar power or wind power into electric energy have attracted more attention. Accordingly, various secondary batteries have been developed as power storage devices that are safe and that can store a large amount of electric energy.

Among these, secondary batteries that charge and discharge by exchanging metal ions between a positive electrode and a negative electrode are known to have a high voltage and high energy density, and are usually lithium ion secondary batteries. In a typical lithium ion secondary battery, an active material capable of retaining lithium is introduced into the positive electrode and the negative electrode, and charging and discharging are performed by exchanging lithium ions between the positive electrode active material and the negative electrode active material. A lithium metal secondary battery has also been developed that does not use an active material in the negative electrode, but retains lithium by depositing lithium metal on the surface of the negative electrode.

For example, Patent Document 1 discloses a high energy density, high power lithium metal anode secondary battery with a volumetric energy density greater than 1000 Wh/L and/or a mass energy density greater than 350 Wh/kg when discharged at room temperature at a rate of at least 1C. Patent Document 1 discloses that an ultrathin lithium metal anode is used to realize this lithium metal anode secondary battery.

Patent Document 2 discloses a lithium secondary battery containing a positive electrode, a negative electrode, a separation film interposed between the electrodes, and an electrolyte, in which, in the negative electrode, metal particles are formed on a negative electrode current collector and are moved from the positive electrode by charging to form lithium metal on the negative electrode current collector in the negative electrode. Patent Document 2 discloses that this lithium secondary battery can solve problems caused by the reactivity of lithium metal and problems that occur during the assembly process, and has improved performance and a longer service life.

### Citation List

### Patent Document

Patent Document 1: PCT Japanese Translation Patent Publication No. 2019-517722
Patent Document 2: PCT Japanese Translation Patent Publication No. 2019-537226

### Summary

### Technical Problem

When the present inventors studied batteries of the prior art including those described in the patent documents mentioned above, they found that at least one of energy density or cycle characteristics was insufficient.

For example, a typical secondary battery that charges and discharges by exchanging metal ions between a positive electrode active material and a negative electrode active material does not have sufficient energy density. Meanwhile, in lithium metal secondary batteries of the prior art, that retain lithium by depositing lithium metal on the surface of a negative electrode, such as those described in the patent documents mentioned above, dendritic lithium metal tends to form on the surface of the negative electrode after repeated charging and discharging, which makes short circuiting and capacity loss more likely to occur. As a result, the cycle characteristics are not sufficient.

A solvent used as an electrolytic solution in a lithium secondary battery that retains lithium by depositing lithium metal on the surface of the negative electrode, such as those described in the patent documents mentioned above, normally has a low boiling point, and it is known that such a battery tends to expand in volume due to heat generation during charging, by a tendency to have high vapor pressure. Therefore, in the lithium secondary battery, in consideration of safety, for example, a battery design such that the volume expansion rate is low is required.

In view of these problems, it is an object of the present invention to provide a lithium secondary battery having high energy density and excellent cycle characteristics or safety.

### Solution to Problem

A lithium secondary battery according to an aspect of the present invention includes a positive electrode, a negative electrode that is free of a negative electrode active material, and an electrolytic solution, in which the electrolytic solution contains a lithium salt, a fluorine compound having a monovalent group represented by Formula (A) or Formula (B) ("fluorine compound" for each compound), and a chain-like ether compound that is free of a fluorine atom and has a branched chain. 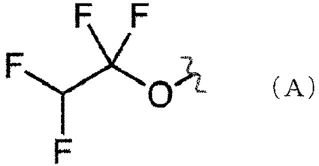 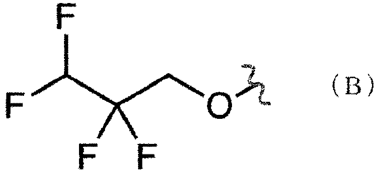 (in the formulae, a wavy line represents a bonding site in the monovalent group)

Because this lithium secondary battery includes a negative electrode that is free of a negative electrode active material, charging and discharging are performed by depositing lithium metal on the surface of the negative electrode and electrolytically dissolving the deposited lithium metal. As a result, energy density is improved.

The present inventors have found that, in a lithium secondary battery that contains the fluorine compound described above, a solid electrolyte interphase layer ("SEI layer") is easily formed on the surface of the negative electrode. Because the SEI layer has ionic conductivity, reactivity of lithium deposition reaction on the surface of the negative electrode, on which the SEI layer is formed, is uniform in a planar direction of the surface of the negative electrode. Therefore, in the lithium secondary battery described above, the growth of the dendritic lithium metal on the negative electrode is suppressed, and the cycle characteristics are excellent. The factor that facilitates the formation of the SEI layer by containing the fluorine compound is not always clear, but factors described later can be considered in the embodiment for carrying out the invention.

The present inventors have found that the lithium secondary battery contains, in the electrolytic solution, the chain-like ether compound that is free of a fluorine atom and has a branched chain, the volume expansion rate of the battery is small when repeatedly charged and discharged. The following points can be considered as the factors, but the factors are not limited thereto. The chain-like ether compound having a branched chain tends to have a large bias of electrons in the molecule and a tendency to have high polarity, as compared with a compound having no branched chain. Therefore, such an ether compound tends to have a high boiling point and a low vapor pressure. Accordingly, it is presumed that the lithium secondary battery of the present invention is excellent in safety because the volume expansion rate of the battery is suppressed. In addition, it is expected that the compatibility with the above-described fluorine compound is improved by lowering the symmetry of the molecular structure.

In the lithium secondary battery according to the aspect of the present invention, it is preferable that the above-described chain-like ether compound is a compound that includes 2 or more and 5 or less ether bonds. In this aspect of the present invention, the solubility of the electrolyte in the electrolytic solution is improved, and the lithium secondary battery is excellent in cycle characteristics.

In the lithium secondary battery according to the aspect of the present invention, it is preferable that the above-described chain-like ether compound has 4 or more and 10 or less carbon atoms. In this aspect of the present invention, the solubility of the electrolyte in the electrolytic solution tends to be improved.

In the lithium secondary battery according to the aspect of the present invention, it is preferable that the above-described chain-like ether compound includes at least one selected from the group consisting of 1,1-dimethoxyethane, 1,2-dimethoxypropane, 2,2-dimethoxypropane, 1,3-dimethoxybutane, 1,2-dimethoxybutane, 2,2-dimethoxybutane, 2,3-dimethoxybutane, 1,2-diethoxypropane, 1,2-diethoxybutane, 2,3-diethoxybutane, and diethoxyethane. In this aspect of the present invention, the lithium secondary battery is further excellent in safety and cycle characteristics.

In the lithium secondary battery according to the aspect of the present invention, it is preferable that the above-described branched chain in the above-described chain-like ether compound is an unsubstituted alkyl group having 1 or more and 10 or less carbon atoms. In this aspect of the present invention, because the solubility of the electrolyte in the electrolytic solution is improved and the boiling point of the chain-like ether compound tends to be higher, the lithium secondary battery is more excellent in safety and cycle characteristics.

In the lithium secondary battery according to the aspect of the present invention, it is preferable that the above-described lithium salt is LiN(SO₂F)₂. In this aspect of the present invention, there is a tendency to suppress dendritic growth of the lithium metal on the surface of the negative electrode.

In the lithium secondary battery according to the aspect of the present invention, it is preferable that the above-described electrolytic solution further contains a linear ether compound that is free of a fluorine atom and is free of a branched chain. In this aspect of the present invention, the solubility of the electrolyte in the electrolytic solution is improved, and the lithium secondary battery is more excellent in cycle characteristics.

In the lithium secondary battery according to the aspect of the present invention, it is preferable that the above-described linear ether compound has 3 or more and 10 or less carbon atoms. In this aspect of the present invention, the solubility of the electrolyte in the electrolytic solution is improved, and the lithium secondary battery is more excellent in cycle characteristics.

In the lithium secondary battery according to the aspect of the present invention, it is preferable that the above-described linear ether compound is a compound that includes 2 or more and 5 or less ether bonds. In this aspect of the present invention, the solubility of the electrolyte in the electrolytic solution is improved, and the lithium secondary battery is excellent in cycle characteristics.

In the lithium secondary battery according to the aspect of the present invention, it is preferable that an amount of the above-described chain-like ether compound is 5% by volume or more and 50% by volume or less relative to an overall amount of solvent components in the electrolytic solution. In this aspect of the present invention, the solubility of the electrolyte in the electrolytic solution is improved, and the lithium secondary battery is excellent in cycle characteristics.

In the lithium secondary battery according to the aspect of the present invention, it is preferable that an amount of the above-described fluorine compound is 30% by volume or more and 95% by volume or less relative to an overall amount of solvent components in the electrolytic solution. Because the SEI layer is more easily formed in this aspect of the present invention, the cycle characteristics of the lithium secondary battery are more excellent.

A lithium secondary battery according to the aspect of the present invention includes a positive electrode, a negative electrode that is free of a negative electrode active material, and an electrolytic solution, in which the electrolytic solution contains a lithium salt, a fluorine compound having a monovalent group represented by Formula (A) or Formula (B), and an ether compound that is free of a fluorine atom, and an amount of the fluorine compound is more than 50% by volume relative to an overall amount of solvent components in the electrolytic solution. 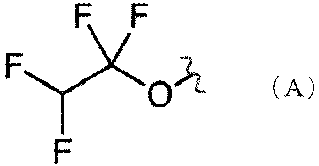 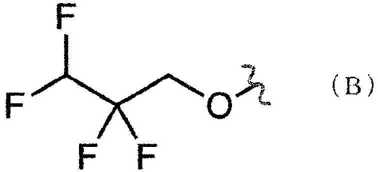 (in the formulae, a wavy line represents a bonding site in the monovalent group)

Because this lithium secondary battery includes a negative electrode that is free of a negative electrode active material as described above, charging and discharging are performed by depositing lithium metal on the surface of the negative electrode and electrolytically dissolving the deposited lithium metal. As a result, energy density is improved.

As described above, it has been found that, in the lithium secondary battery containing the above-described fluorine compound in an amount of more than 50% by volume relative to the overall amount of the solvent in the electrolytic solution, the SEI layer is more easily formed on the surface of the negative electrode. The reactivity of the lithium deposition reaction on the surface of the negative electrode, on which the SEI layer is formed, is uniform with respect to a planar direction of the surface of the negative electrode, and in the above-described lithium secondary battery, the growth of dendritic lithium metal on the negative electrode is suppressed, resulting in excellent cycle characteristics.

The above-described lithium secondary battery further contains, in the electrolytic solution, an ether compound that is free of a fluorine atom. By containing such an ether compound, the solubility of the lithium salt in the electrolytic solution is further improved, and the ionic conductivity is improved. As a result, the above-described lithium secondary battery has more excellent cycle characteristics.

In the lithium secondary battery according to the aspect of the present invention, it is preferable that the above-described fluorine compound has 3 or more and 10 or less carbon atoms. In this aspect of the present invention, the SEI layer tends to be more easily formed.

### Advantageous Effects of Invention

The present invention can provide a lithium secondary battery having high energy density and excellent cycle characteristics or safety.

### Brief Description of Drawings

Fig. 1 is a schematic cross-sectional view of the lithium secondary battery in the embodiment of the present invention.
Fig. 2 is a schematic cross-sectional view of the lithium secondary battery in the embodiment of the present invention during use.

### Description of Embodiments

Embodiments of the present invention ("embodiments") will now be described with reference to the drawings when necessary. In the drawings, identical elements are designated by the same reference numbers, and redundant descriptions of these elements have been omitted. Positional relationships such as up, down, left, and right are based on the positional relationship shown in the drawings unless otherwise specified. The dimensional ratios shown in the drawings are not limited to the depicted ratios.

### [First Embodiment]

### (Lithium Secondary Battery)

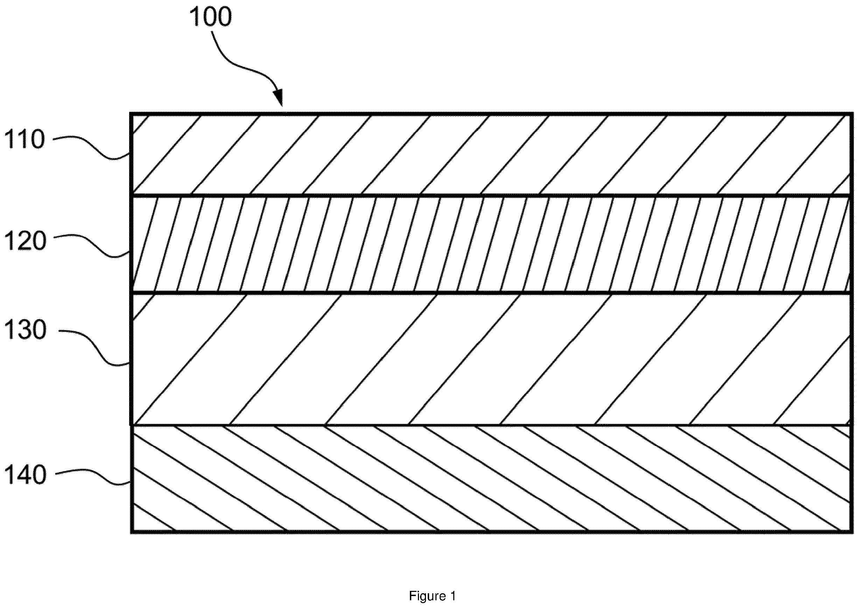

Fig. 1 is a schematic cross-sectional view of the lithium secondary battery in the embodiment of the present invention. As shown in Fig. 1, the lithium secondary battery 100 in the embodiment includes a positive electrode 120, a negative electrode 140 that is free of a negative electrode active material, a separator 130 that is disposed between the positive electrode 120 and the negative electrode 140, and an electrolytic solution that is not shown in Fig. 1. The positive electrode 120 has a positive electrode current collector 110 on a surface opposite to the surface facing the separator 130.

Hereinafter, each configuration of the lithium secondary battery 100 will be described.

### (Negative Electrode)

The negative electrode 140 is free of a negative electrode active material. In the present specification, the "negative electrode active material" is a material that causes an electrode reaction, that is, an oxidation reaction and a reduction reaction at the negative electrode. Specifically, examples of the negative electrode active material in the embodiment include lithium metal and a host material for a lithium element (lithium ions or lithium metal). The host material for the lithium element means a material provided to retain the lithium ions or the lithium metal in the negative electrode. Examples of retaining mechanisms include, but are not limited to, intercalation, alloying, and occlusion of metallic clusters, and intercalation is typically used.

In the lithium secondary battery in the embodiment, because the negative electrode is free of a negative electrode active material before initial charging of the battery, charging and discharging are performed by depositing lithium metal on the negative electrode and electrolytically dissolving the deposited lithium metal. Therefore, in the lithium secondary battery in the embodiment, the volume occupied by the negative electrode active material and the mass of the negative electrode active material are reduced as compared with a lithium secondary battery containing the negative electrode active material, and the volume and mass of the entire battery are small, so that the energy density is high in principle.

In the lithium secondary battery 100 in the embodiment, the negative electrode 140 does not contain a negative electrode active material before initial charging of the battery, lithium metal is deposited on the negative electrode 140 when the battery is charged, and the deposited lithium metal is electrolytically dissolved when the battery is discharged. Therefore, in the lithium secondary battery in the embodiment, the negative electrode acts as a negative electrode current collector.

In a case where the lithium secondary battery 100 in the embodiment is compared with a lithium ion battery (LIB) and a lithium metal battery (LMB), the following points are different.

In the lithium ion battery (LIB), a negative electrode contains a host material for a lithium element (lithium ions or lithium metal), this material is filled with the lithium element when the battery is charged, and the host material releases the lithium element, thereby discharging the battery. The LIB is different from the lithium secondary battery 100 in the embodiment in that the negative electrode contains the host material for the lithium element.

The lithium metal battery (LMB) is produced by using, as a negative electrode, an electrode having lithium metal on its surface or a single lithium metal. That is, the LMB is different from the lithium secondary battery 100 in the embodiment in that the negative electrode contains the lithium metal that is the negative electrode active material, immediately after assembling the battery, that is, before initial charging of the battery. The LMB uses the electrode containing lithium metal having high flammability and reactivity in its production. However, because the lithium secondary battery 100 in the embodiment uses the negative electrode free of lithium metal, the lithium secondary battery 100 in the embodiment is more safe and productive.

In the present specification, the negative electrode "free of a negative electrode active material" means the negative electrode 140 does not contain the negative electrode active material or does not substantially contain the negative electrode active material. The fact that the negative electrode 140 does not substantially contain the negative electrode active material means the amount of the negative electrode active material in the negative electrode 140 is 10% by mass or less relative to the overall mass of the negative electrode. The amount of negative electrode active material in the negative electrode relative to the overall mass of the negative electrode 140 is preferably 5.0% by mass or less, and may be 1.0% by mass or less, 0.1% by mass or less, or 0.0% by mass or less. Since the negative electrode 140 does not contain the negative electrode active material or the amount of the negative electrode active material in the negative electrode 140 is within the above-described range, the energy density of the lithium secondary battery 100 is high.

In the present specification, the "before initial charging" of the battery means a state from the time when the battery is assembled to the time when the battery is first charged. In addition, "at the end of discharging" of the battery means a state in which the battery voltage is 1.0 V or more and 3.8 V or less, preferably 1.0 V or more and 3.0 V or less.

In the present specification, the "lithium secondary battery including a negative electrode free of a negative electrode active material" means the negative electrode 140 is free of the negative electrode active material before initial charging of the battery. Therefore, the phrase "negative electrode free of a negative electrode active material" may be rephrased as "negative electrode free of a negative electrode active material before initial charging of the battery", "negative electrode that does not contain a negative electrode active material other than lithium metal regardless of the state of charge of the battery and does not contain the lithium metal before initial charging", "negative electrode current collector free of lithium metal before initial charging", or the like. In addition, the "lithium secondary battery including a negative electrode free of a negative electrode active material" may be rephrased as an anode free lithium battery, a zero anode lithium battery, or an anodeless lithium battery.

In the negative electrode 140 in the embodiment, regardless of the state of charge of the battery, the amount of the negative electrode active material other than lithium metal may be 10% by mass or less relative to the overall mass of the negative electrode, preferably 5.0% by mass or less, and may be 1.0% by mass or less, 0.1% by mass or less, 0.0% by mass or less, or 0% by mass.

In addition, in the negative electrode 140 in the embodiment, the amount of lithium metal before initial charging may be 10% by mass or less relative to the overall mass of the negative electrode, preferably 5.0% by mass or less, and may be 1.0% by mass or less, 0.1% by mass or less, 0.0% by mass or less, or 0% by mass.

In the lithium secondary battery 100 in the embodiment, in a case where the battery voltage is 1.0 V or more and 3.5 V or less, the amount of lithium metal may be 10% by mass or less relative to the overall mass of the negative electrode 140 (preferably 5.0% by mass or less, and may be 1.0% by mass or less); in a case where the battery voltage is 1.0 V or more and 3.0 V or less, the amount of lithium metal may be 10% by mass or less relative to the overall mass of the negative electrode 140 (preferably 5.0% by mass or less, and may be 1.0% by mass or less); or in a case where the battery voltage is 1.0 V or more and 2.5 V or less, the amount of lithium metal may be 10% by mass or less relative to the overall mass of the negative electrode 140 (preferably 5.0% by mass or less, and may be 1.0% by mass or less).

In the lithium secondary battery 100 in the embodiment, a ratio M_{3.0}/M_{4.2} of a mass M_{3.0} of lithium metal deposited on the negative electrode in a state in which the battery voltage is 3.0 V to a mass M_{4.2} of lithium metal deposited on the negative electrode in a state in which the battery voltage is 4.2 V is preferably 40% or less, more preferably 38% or less, and even more preferably 35% or less. The ratio M_{3.0}/M_{4.2} may be 1.0% or more, 2.0% or more, 3.0% or more, or 4.0% or more.

Examples of the negative electrode active material in the embodiment include lithium metal, alloys containing lithium metal, carbon-based substances, metal oxides, metals alloyed with lithium, and alloys containing the metals. Carbon-based substances include, but are not limited to, graphene, graphite, hard carbon, mesoporous carbon, carbon nanotubes, and carbon nanohorns. Examples of metal oxides include, but are not limited to, titanium oxide-based compounds, tin oxide-based compounds, and cobalt oxide-based compounds. Examples of metals alloyed with lithium include silicon, germanium, tin, lead, aluminum, and gallium.

There are no particular restrictions on the negative electrode 140 in the embodiment as long as it does not contain a negative electrode active material and can be used as a current collector. Examples of the negative electrode 140 in the embodiment include at least one selected from the group consisting of metals such as Cu, Ni, Ti, Fe, and other metals that do not react with Li, alloys of these metals, and stainless steel (SUS), and preferred examples thereof include at least one selected from the group consisting of Cu, Ni, alloys of these metals, and stainless steel (SUS). When this negative electrode is used, the energy density and productivity of the battery tend to be further improved. When SUS is used as the negative electrode, any well-known type of SUS can be used. The negative electrode materials mentioned above may be used alone or in combinations of two or more. In the present specification, the "metal that does not react with Li" refers to a metal that does not react with lithium ions or lithium metal to form an alloy under the operating conditions of the lithium secondary battery.

The capacity of the negative electrode 140 may be sufficiently smaller than the capacity of the positive electrode 120, and may be, for example, 20% or less, 15% or less, 10% or less, or 5% or less. The capacities of the positive electrode 120 and the negative electrode 140 can be measured by any method common in the art, respectively.

The average thickness of the negative electrode 140 is preferably 4 µm or more and 20 µm or less, more preferably 5 µm or more and 18 µm or less, and even more preferably 6 µm or more and 15 µm or less. Because the volume occupied by the negative electrode 140 in the lithium secondary battery 100 is reduced in this aspect of the present invention, the energy density of the lithium secondary battery 100 is further improved.

### (Electrolytic Solution)

The electrolytic solution is a solution that contains an electrolyte and a solvent and has ionic conductivity, and acts as a conductive path for lithium ions. The electrolytic solution may be impregnated in the separator 130 or may be sealed together with a laminate of the positive electrode 120, the separator 130, and the negative electrode 140 inside a sealed container.

The electrolytic solution contains a lithium salt, a fluorine compound having a monovalent group represented by Formula (A) or Formula (B), and an ether compound that is free of a fluorine atom, and an amount of the fluorine compound is more than 50% by volume relative to an overall amount of solvent components in the electrolytic solution. 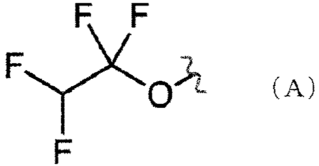 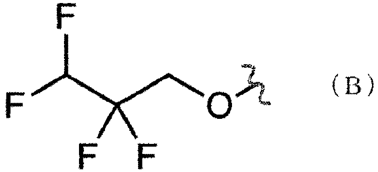 In the formulae, a wavy line represents a bonding site in the monovalent group.

Generally, in an anode free lithium secondary battery containing the electrolytic solution, an SEI layer is formed on a surface of the negative electrode or the like by decomposing the solvent or the like in the electrolytic solution. Due to the SEI layer in the lithium secondary battery, further decomposition of components in the electrolytic solution, irreversible reduction of lithium ions caused by the decomposition, generation of gas, and the like are suppressed. In addition, because the SEI layer has ionic conductivity, reactivity of lithium deposition reaction on the surface of the negative electrode, on which the SEI layer is formed, is uniform in a planar direction of the surface of the negative electrode. Therefore, promoting the formation of the SEI layer is very important for improving the performance of the anode free lithium secondary battery. The present inventors have found that, in the lithium secondary battery containing the above-described fluorine compound as a solvent, the SEI layer is easily formed on the surface of the negative electrode, and the growth of dendritic lithium metal on the negative electrode is further suppressed, and as a result, the cycle characteristics are further improved. The factors are not necessarily clear, but the following factors can be considered.

It is considered that not only the lithium ions but also the fluorine compound as a solvent are reduced on the negative electrode during charging of the lithium secondary battery 100, particularly during initial charging. The portion represented by Formula (A) and the portion represented by Formula (B) in the fluorine compound have high reactivity of oxygen atoms due to being substituted with a large number of fluorine. Therefore, it is presumed that a part or all of the portion represented by Formula (A) and the portion represented by Formula (B) are likely to be eliminated. As a result, during charging of the lithium secondary battery 100, a part or all of the portion represented by Formula (A) and the portion represented by Formula (B) are absorbed on the surface of the negative electrode, and since the SEI layer is formed starting from the absorbed portion, it is presumed that the SEI layer is likely to be formed in the lithium secondary battery 100. However, the suppressive factors are not limited to these.

Surprisingly, it is found that the SEI layer formed in the lithium secondary battery 100, that contains the above-described fluorine compound, has higher ionic conductivity than SEI layers formed in lithium secondary batteries of the prior art. It is considered that this is because the portion represented by Formula (A) and the portion represented by Formula (B) are substituted with fluorine, so that the amount of fluorine in the formed SEI layer is high, and as a result, the exchanging path of the lithium ions in the SEI layer is increased or expanded. However, the suppressive factors are not limited to these.

Therefore, in the lithium secondary battery 100, the SEI layer is easily formed, but the internal resistance of the battery is low and the rate capability is excellent. That is, the lithium secondary battery 100 is excellent in cycle characteristics and rate capability. The "rate capability" means a performance capable of charging and discharging with large current, and it is known that the rate capability is excellent when the internal resistance of the battery is low.

In the portion represented by Formula (A) and the portion represented by Formula (B) of the fluorine compound, some of the hydrogen atoms in the alkyl group are not substituted with fluorine atoms. Therefore, in the above-described lithium secondary battery 100 containing the above-described fluorine compound, the concentration of the electrolyte in the electrolytic solution can be increased, so that the cycle characteristics and rate capability can be further improved.

In the present specification, the electrolytic solution "contains a fluorine compound" means the fluorine compound is contained as a solvent in the electrolytic solution. That is, in the usage environment of lithium secondary batteries, any fluorine compound can be used as long as the fluorine compound can dissolve the electrolyte to prepare an electrolytic solution in a solution phase, or the compound alone or a mixture with other compounds may be liquid. The same applies to the clause the electrolytic solution "contains an ether compound".

In the embodiment, the fluorine compound is not particularly limited as long as the fluorine compound is a compound having a monovalent group represented by Formula (A) or Formula (B) described above, and examples of the fluorine compound include a compound having an ether bond ("ether compound"), a compound having an ester bond, and a compound having a carbonate bond. From the standpoint of further improving solubility of the electrolyte in the electrolytic solution and from the standpoint that the SEI layer is more easily formed, the fluorine compound is preferably an ether compound.

Examples of the ether compound as the fluorine compound include an ether compound having both the monovalent group represented by Formula (A) and the monovalent group represented by Formula (B) ("first fluorine solvent"), an ether compound that has the monovalent group represented by Formula (A) and is free of the monovalent group represented by Formula (B) ("second fluorine solvent"), and an ether compound that is free of the monovalent group represented by Formula (A) and has the monovalent group represented by Formula (B) ("third fluorine solvent").

Examples of the first fluorine solvent include
1,1,2,2-tetrafluoroethyl-2,2,3,3-tetrafluoropropyl ether,
1,1,2,2-tetrafluoroethoxy-2,2,3,3-tetrafluoropropoxymethane, and
1,1,2,2-tetrafluoroethoxy-2,2,3,3-tetrafluoropropoxyethane. From the standpoint of effectively and reliably exhibiting the effects of fluorine compound mentioned above,
1,1,2,2-tetrafluoroethyl-2,2,3,3-tetrafluoropropyl ether is preferable as the first fluorine solvent.

Examples of the second fluorine solvent include
1,1,2,2-tetrafluoroethyl-2,2,2-trifluoroethyl ether, methyl-1,1,2,2-tetrafluoroethyl ether, ethyl-1,1,2,2-tetrafluoroethyl ether, propyl-1,1,2,2-tetrafluoroethyl ether, and
1H,1H,5H-octafluoropentyl-1,1,2,2-tetrafluoroethyl ether. From the standpoint of effectively and reliably exhibiting the effects of fluorine compound mentioned above, 1,1,2,2-tetrafluoroethyl-2,2,2-trifluoroethyl ether, methyl-1,1,2,2-tetrafluoroethyl ether, ethyl-1,1,2,2-tetrafluoroethyl ether, or
1H,1H,5H-octafluoropentyl-1,1,2,2-tetrafluoroethyl ether is preferable as the second fluorine solvent.

Examples of the third fluorine solvent include
difluoromethyl-2,2,3,3-tetrafluoropropyl ether, trifluoromethyl-2,2,3,3-tetrafluoropropyl ether, difluoromethyl-2,2,3,3-tetrafluoropropyl ether, and
methyl-2,2,3,3-tetrafluoropropyl ether. From the standpoint of effectively and reliably exhibiting the effects of fluorine compound mentioned above, difluoromethyl-2,2,3,3-tetrafluoropropyl ether is preferable as the third fluorine solvent.

In the fluorine compound, the ratio of the number of fluorine atoms to the total number of hydrogen atoms and fluorine atoms (F/(H + F)) is not particularly limited, but it may be 0.1 or more, 0.2 or more, 0.3 or more, 0.4 or more, 0.5 or more, or 0.6 or more. In addition, the ratio (F/(H + F)) may be, for example, 0.9 or less, 0.8 or less, or 0.7 or less.

The number of carbon atoms in the fluorine compound is not particularly limited as long as it exhibits sufficient solubility in the electrolyte, and is, for example, 3 or more and 15 or less. From the standpoint of further improving the solubility of the electrolyte in the electrolytic solution, the number of carbon atoms in the fluorine compound is preferably 4 or more, 5 or more, or 6 or more. In addition, from the same standpoint, the number of carbon atoms in the fluorine compound is preferably 14 or less, 12 or less, 10 or less, or 8 or less.

It is sufficient that the electrolytic solution contains at least one type of fluorine compound. From the standpoint of further improving solubility of the electrolyte in the electrolytic solution and from the standpoint that the SEI layer is more easily formed, the electrolytic solution preferably contains two or more types of fluorine compounds. From the same standpoint, the electrolytic solution preferably contains at least one kind selected from the group consisting of the first fluorine solvent, the second fluorine solvent, and the third fluorine solvent, more preferably contains at least two kinds selected from the group consisting of the first fluorine solvent, the second fluorine solvent, and the third fluorine solvent, and even more preferably all of the first fluorine solvent, the second fluorine solvent, and the third fluorine solvent.

The electrolytic solution may contain, as a solvent, a fluorine-containing compound other than the above-described fluorine compound. This compound is not particularly limited, and examples of the compound include a fluorine-substituted alkyl ether compound that is free of the monovalent group represented by Formula (A) and is free of the monovalent group represented by Formula (B) ("fourth fluorine solvent"). From the standpoint of further improving solubility of the electrolyte in the electrolytic solution and from the standpoint that the SEI layer is more easily formed, the electrolytic solution preferably contains the fourth fluorine solvent.

The "fluorine-substituted alkyl ether compound" means an ether compound having a fluorine-substituted alkyl group, the "fluorine-substituted alkyl group" means an alkyl group in which at least one hydrogen atom is substituted with fluorine, and the "compound having no fluorine atom" means a compound having no fluorine-substituted alkyl group.

In the fourth fluorine solvent, the ratio of the number of fluorine atoms to the total number of hydrogen atoms and fluorine atoms (F/(H + F)) is not particularly limited, but it may be 0.1 or more, 0.2 or more, or 0.5 or more. In addition, the fourth fluorine solvent preferably has a perfluoroalkyl group and an unsubstituted alkyl group. Examples of the perfluoroalkyl group include a linear or branched perfluoroalkyl group having 1 to 10 carbon atoms, and a linear perfluoroalkyl group having 2 to 6 carbon atoms is preferable. Examples of the unsubstituted alkyl group include a linear or branched unsubstituted alkyl group having 1 to 5 carbon atoms, and a linear unsubstituted alkyl group having 1 to 3 carbon atoms is preferable. Examples of the linear unsubstituted alkyl group having 1 to 3 carbon atoms include a methyl group and an ethyl group.

Examples of the fourth fluorine solvent include methyl nonafluorobutyl ether, ethyl nonafluorobutyl ether,
1,1,1,2,2,3,4,5,5,5-decafluoro-3-methoxy-4-trifluoromethylpentane, methyl-2,2,3,3,3-pentafluoropropyl ether, 1,1,2,3,3,3-hexafluoropropylmethyl ether, ethyl-1,1,2,3,3,3-hexafluoropropyl ether, and tetrafluoroethyltetrafluoropropyl ether. From the standpoint of effectively and reliably exhibiting the effects of fluorine compound mentioned above, methyl nonafluorobutyl ether, ethyl nonafluorobutyl ether, or 1,1,1,2,2,3,4,5,5,5-decafluoro-3-methoxy-4-trifluoromethylpentane is preferable as the fourth fluorine solvent.

The electrolytic solution contains an ether compound having no fluorine atom ("ether co-solvent"). By containing the ether co-solvent, the solubility of the electrolyte in the electrolytic solution is further improved, so that the ionic conductivity in the electrolytic solution is improved. As a result, the lithium secondary battery 100 has excellent cycle characteristics.

The ether co-solvent is not particularly limited as long as the ether co-solvent is an ether compound that is free of a fluorine atom, and examples of the ether co-solvent include triethylene glycol dimethyl ether, 1,2-dimethoxyethane, 1,1-dimethoxyethane, diethylene glycol dimethyl ether, tetrahydrofuran, tetrahydropyran, dioxolane, dioxane, 4-methyl-1,3-dioxane, oxetane, and hexamethylene oxide. From the standpoint of further improving the solubility of the electrolyte in the electrolytic solution, the ether co-solvent is preferably a compound having 2, 3, 4, 5, 6, 7, or 8 ether bonds, and 1,2-dimethoxyethane, diethylene glycol dimethyl ether, or triethylene glycol dimethyl ether is more preferable.

The number of carbon atoms in the ether co-solvent is not particularly limited, and is, for example, 2 or more and 20 or less. From the standpoint of further improving the solubility of the electrolyte in the electrolytic solution, the number of carbon atoms in the ether co-solvent is preferably 3 or more, 4 or more, 5 or more, or 6 or more. In addition, from the same standpoint, the number of carbon atoms in the ether co-solvent is preferably 15 or less, 12 or less, 10 or less, 9 or less, or 7 or less.

The electrolytic solution may further contain a compound having no fluorine atom other than the above-described ether co-solvent ("non-ether co-solvent"). Examples of the non-ether co-solvent include, but are not limited to, acetonitrile, dimethyl carbonate, diethyl carbonate, ethyl methyl carbonate, ethylene carbonate, propylene carbonate, chloroethylene carbonate, methyl acetate, ethyl acetate, propyl acetate, methyl propionate, ethyl propionate, trimethyl phosphate, and triethyl phosphate. The non-ether co-solvent may have at least one group selected from the group consisting of a carbonate group, a carbonyl group, a ketone group, and an ester group.

As the solvent of the electrolytic solution, the above-described fluorine compound, the above-described fluorine-containing compound other than the fluorine compound, the ether co-solvent, and the non-ether co-solvent can be freely used in combination, and the fluorine solvent may be used alone or in combinations of two or more. In the electrolytic solution, as the compound having no fluorine atom, the ether co-solvent may be used alone, or the ether co-solvent may be used in combination with additional ether co-solvent or non-ether co-solvent in two or more.

The amount of the fluorine compound in the electrolytic solution is more than 50% by volume with respect to the overall amount of the solvent components in the electrolytic solution. In a case where the amount of the fluorine compound is within the above-described range, because the SEI layer is easily formed, the cycle characteristics of the lithium secondary battery 100 are excellent. The amount of the fluorine compound is not particularly limited as long as it is within the above-described range, and the amount of the fluorine compound is preferably 51% by volume or more, 55% by volume or more, 60% by volume or more, 65% by volume or more, 70% by volume or more, 75% by volume or more, 80% by volume or more, 85% by volume or more, or 90% by volume or more relative to the overall amount of the solvent components in the electrolytic solution. The upper limit of the amount of the fluorine compound is not particularly limited, and the amount of the fluorine compound may be less than 100% by volume, 99% by volume or less, 98% by volume or less, 95% by volume or less, 90% by volume or less, 85% by volume or less, 80% by volume or less, 70% by volume or less, or 60% by volume or less. In a case where the amount of the fluorine compound is within the above-described range, the solubility of the electrolyte in the electrolytic solution is further improved.

In a case where the electrolytic solution contains, as the fluorine compound, two or more kinds of the first fluorine solvent, the second fluorine solvent, and the third fluorine solvent, the amount of the first fluorine solvent is not particularly limited, but relative to the overall amount of the above-described fluorine compound, may be 5% by volume or more or 10% by volume or more, and may be 50% by volume or less, 40% by volume or less, 30% by volume or less, 20% by volume or less, or 15% by volume or less.

In the above-described case, the amount of the second fluorine solvent is not particularly limited, but relative to the overall amount of the above-described fluorine compound, may be 50% by volume or more, 60% by volume or more, 65% by volume or more, 70% by volume or more, or 75% by volume or more, and may be 95% by volume or less, 90% by volume or less, or 85% by volume or less.

In the above-described case, the amount of the third fluorine solvent is not particularly limited, but relative to the overall amount of the above-described fluorine compound, may be 0% by volume, 5% by volume or more, or 10% by volume or more, and may be 50% by volume or less, 40% by volume or less, 30% by volume or less, 20% by volume or less, or 15% by volume or less.

In a case where the electrolytic solution contains two or more kinds of first fluorine solvents, the amount of the first fluorine solvent is calculated using the total amount thereof. In addition, in a case where the electrolytic solution contains two or more kinds of second fluorine solvents or third fluorine solvents, the calculation thereof is performed in the same manner.

In a case where the electrolytic solution contains the fourth fluorine solvent, the amount of the fourth fluorine solvent is not particularly limited, but relative to the overall amount of the solvent components in the electrolytic solution, it is preferably more than 0% by volume, 5% by volume or more, 10% by volume or more, or 15% by volume or more. In a case where the amount of the fourth fluorine solvent is within the above-described range, the solubility of the electrolyte in the electrolytic solution tends to be further improved, or the SEI layer tends to be more easily formed. The upper limit of the amount of the fourth fluorine solvent is not particularly limited, and the amount of the fourth fluorine solvent may be 40% by volume or less, 35% by volume or less, 30% by volume or less, 25% by volume or less, 20% by volume or less, or 15% by volume or less relative to the overall amount of the solvent components in the electrolytic solution.

The amount of the ether co-solvent in the electrolytic solution is not particularly limited, but relative to the overall amount of the solvent components in the electrolytic solution, it is preferably 5% by volume or more, 10% by volume or more, 15% by volume or more, 20% by volume or more, 25% by volume or more, 30% by volume or more, or 35% by volume or more. The amount of the ether co-solvent may be 50% by volume or less, 45% by volume or less, 40% by volume or less, 35% by volume or less, 30% by volume or less, 25% by volume or less, 20% by volume or less, 15% by volume or less, or 10% by volume or less. In a case where the amount of the ether co-solvent is within the above-described range, the cycle characteristics of the battery tend to be further improved.

In a case where the electrolytic solution contains the non-ether co-solvent, the amount of the non-ether co-solvent is not particularly limited, but relative to the overall amount of the solvent components in the electrolytic solution, it may be 0% by volume or more, 5% by volume or more, 10% by volume or more, or 15% by volume or more. In addition, the amount of the non-ether co-solvent may be 50% by volume or less, 40% by volume or less, 30% by volume or less, 25% by volume or less, 20% by volume or less, 15% by volume or less, or 10% by volume or less.

The types of compounds that can be used as the solvent in the embodiment are illustrated in the following tables together with structural formulae. Table 1 illustrates examples of compounds that can be used as the above-described fluorine compound and the fluorine-containing compound other than the fluorine compound. In addition, Table 2 illustrates examples of compounds that can be used as the ether co-solvent. However, the types of compounds that can be used as the solvent are not limited thereto.

**[Table 1]**

| Fluorine solvent | | | | | |
|---|---|---|---|---|---|
| 1,1,2,2-Tetrafluoro ethyl-2,2,3,3-tetraf luoropropyl ether | 1,1,2,2-Tetrafluoro ethyl-2,2,2-trifluor oethyl ether | Ethyl-1,1,2,2-tetraf luoroethyl ether | Methyl-1, 1 ,2,2-tetr afluoroethyl ether | 1H,1H,5H-Octaflu oropentyl-1,1,2,2-t etrafluoroethyl ether | Difluoromethyl-2,2 ,3,3-tetrafluoropro pyl ether |
| 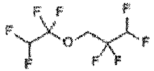 | 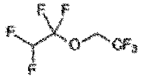 | 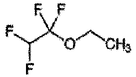 | 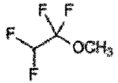 | 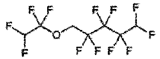 | 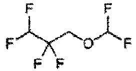 |
| Methyl nonafluorobutyl ether | Ethyl nonafluorobutyl ether | 1,1,1,2,2,3,4,5,5,5 -Decafluoro-3-met hoxy-4-trifluorome thylpentane | Methyl-2,2,3,3,3-p entafluoropropyl ether | 1,1,2,3,3,3-Hexafl uoropropylmethyl ether | Ethyl-1,1,2,3,3,3-h exafluoropropyl ether |
| 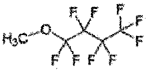 | 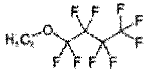 | 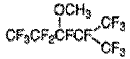 | 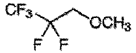 | 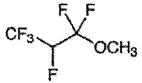 | 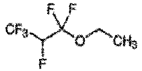 |

**[Table 2]**

| Co-solvent | | |
|---|---|---|
| Dimethoxymethane | 1,2-Dimethoxyethane | 1,2-Diethoxyethane |
| 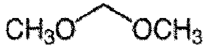 | 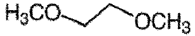 | 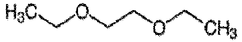 |
| 1,2-Dimethoxypropane | Diethylene glycol dimethyl ether | Triethylene glycol dimethyl ether |
| 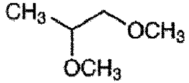 | 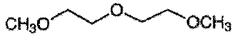 | 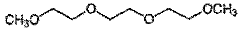 |

Examples of the lithium salt contained in the electrolytic solution include, but are not limited to, Lil, LiCl, LiBr, LiF, LiBF₄, LiPF₆, LiAsF₆, LiSOsCFs, LiN(SO₂F)₂, LiN(SO₂CF₃)₂, LiN(SO₂CF₃CF₃)₂, LiBF₂(C₂O₄), LiB(O₂C₂H₄)₂, LiB(O₂C₂H₄)F₂, LiB(OCOCF₃)₄, LiNO₃, and Li₂SO₄. From the standpoint of further improving the energy density and cycle characteristics of the lithium secondary battery 100, LiN(SO₂F)₂, LiPF₆, or LiBF₂(C₂O₄) is preferable as the lithium salt. In addition, when the electrolytic solution contains at least one of LiN(SO₂F)₂, LiPF₆, or LiBF₂(C₂O₄), the formation and growth of the SEI layer on the surface of the negative electrode are further promoted, and this tends to make it possible to obtain a lithium secondary battery 100 having more excellent cycle characteristics. These lithium salts can be used alone or in combinations of two or more.

The electrolytic solution may further contain a salt other than the lithium salt as the electrolyte. Examples of such a salt include salts of Na, K, Ca, or Mg.

The concentration of the lithium salt in the electrolytic solution is not particularly limited, but is preferably 0.5 M or more, more preferably 0.7 M or more, even more preferably 0.9 M or more, and still more preferably 1.0 M or more. When the concentration of the lithium salt is within the above-described range, the SEI layer is more easily formed and the internal resistance tends to be further lowered. In particular, in the lithium secondary battery 100 containing the fluorine compound as the solvent, the concentration of the lithium salt in the electrolytic solution can be increased, so that the cycle characteristics and rate capability can be further improved. The upper limit of the concentration of the lithium salt is not particularly limited, and the concentration of the lithium salt may be 10.0 M or less, 5.0 M or less, or 2.0 M or less.

The lithium secondary battery in the embodiment may contain the electrolytic solution or the components of the electrolytic solution in a state other than the liquid. For example, by adding an electrolytic solution when preparing the separator described later, a battery can be obtained in which the electrolytic solution is contained in a solid or semi-solid (gel) component. In addition, the electrolytic solution can be rephrased as the electrolyte.

The fact that the electrolytic solution contains the fluorine compound and the ether co-solvent can be confirmed by any method common in the art. Examples of such a method include an NMR measurement method, a mass analysis method such as HPLC-MS, and an IR measurement method.

### (Solid Electrolyte Interphase Layer)

It is presumed that, in the lithium secondary battery 100, a solid electrolyte interphase layer (SEI layer) is formed on the surface of the negative electrode 140 by charging, particularly initial charging, but the lithium secondary battery 100 may not have the SEI layer. It is presumed that the SEI layer to be formed includes an organic compound derived from at least one of the portion represented by Formula (A) or the portion represented by Formula (B) of the above-described fluorine compound, but for example, other lithium-containing inorganic compounds, lithium-containing organic compounds, or the like may be included.

The lithium-containing organic compound and the lithium-containing inorganic compound are not particularly limited as long as they are included in any well-known SEI layer. Examples of the lithium-containing organic compound include, but are not limited to, organic compounds such as lithium alkyl carbonate, lithium alkoxide, and lithium alkyl ester, and examples of the lithium-containing inorganic compound include, but are not limited to, LiF, Li₂CO₃, Li₂O, LiOH, a lithium borate compound, a lithium phosphate compound, a lithium sulfate compound, a lithium nitrate compound, a lithium nitrite compound, and a lithium sulfite compound.

Because the lithium secondary battery 100 contains the fluorine compound as a solvent, the formation of the SEI layer is promoted. Because the SEI layer has ionic conductivity, reactivity of lithium deposition reaction on the surface of the negative electrode, on which the SEI layer is formed, is uniform in a planar direction of the surface of the negative electrode. Therefore, in the lithium secondary battery 100, the growth of the dendritic lithium metal on the negative electrode is suppressed, and the cycle characteristics are excellent.

The typical average thickness of the SEI layer is 1 nm or more and 10 µm or less. When the SEI layer is formed in the lithium secondary battery 100, the lithium metal deposited by charging the battery may be deposited at the interface between the negative electrode 140 and the SEI layer, and may be deposited at the interface between the SEI layer and the separator.

### (Positive Electrode)

The positive electrode 120 is not particularly limited as long as it is a positive electrode commonly used in a lithium secondary battery, and a known material can be selected as needed, depending on the use of the lithium secondary battery. From the standpoint of increasing the stability and output voltage of the lithium secondary battery 100, the positive electrode 120 preferably contains a positive electrode active material.

In the present specification, the "positive electrode active material" means a material used to retain a lithium element (typically, lithium ions) in the positive electrode of the battery, and may be referred to as a host material for the lithium element (typically, lithium ions). Examples of positive electrode active materials include, but are not limited to, metal oxides and metal phosphates. Examples of metal oxides include, but are not limited to, cobalt oxide-based compounds, manganese oxide-based compounds, and nickel oxide-based compounds. Examples of metal phosphates include, but are not limited to, iron phosphate-based compounds and cobalt phosphate-based compounds. Typical examples of positive electrode active materials include LiCoO₂, LiNiₓCo_{y}Mn_{z}O₂ (x + y + z = 1), LiNiₓMn_{y}O₂ (x + y = 1), LiNiO₂, LiMn₂O₄, LiFePO₄, LiCoPO₄, FeF₃, LiFeOF, LiNiOF, and TiS₂.

The positive electrode active materials mentioned above can be used alone or in combinations of two or more. The positive electrode 120 may contain components other than the positive electrode active material. Examples of these components include, but are not limited to, commonly used conductive aids, binders, solid polymer electrolytes, and inorganic solid electrolytes.

Examples of conductive aids that can be used in the positive electrode 120 include, but are not limited to, carbon black, single-wall carbon nanotubes (SW-CNT), multi-wall carbon nanotubes (MW-CNT), carbon nanofibers, and acetylene black. Examples of binders include, but are not limited to, polyvinylidene fluoride, polytetrafluoroethylene, styrene butadiene rubber, acrylic resins, and polyimide resins.

The amount of the positive electrode active material in the positive electrode 120 may be, for example, 50% by mass or more and 100% by mass or less relative to the overall mass of the positive electrode 120. The amount of the conductive aid in the positive electrode 120 may be, for example, 0.5% by mass or more and 30% by mass or less relative to the overall mass of the positive electrode 120. The amount of the binder in the positive electrode 120 may be, for example, 0.5% by mass or more and 30% by mass or less relative to the overall mass of the positive electrode 120. The total amount of the solid polymer electrolyte and the inorganic solid electrolyte may be 0.5% by mass or more and 30% by mass or less relative to the overall mass of the positive electrode 120.

### (Positive Electrode Current Collector)

The positive electrode 120 has, on one side thereof, a positive electrode current collector 110. The positive electrode current collector 110 is not particularly limited as long as it is a conductor that does not react with lithium ions in the battery. Examples of such a positive electrode current collector include aluminum.

The average thickness of the positive electrode current collector 110 is preferably 4 µm or more and 20 µm or less, more preferably 5 µm or more and 18 µm or less, and even more preferably 6 µm or more and 15 µm or less. Because the volume occupied by the positive electrode current collector 110 in the lithium secondary battery 100 is reduced in this aspect of the present invention, the energy density of the lithium secondary battery 100 is further improved.

### (Separator)

The separator 130 is the component that separates the positive electrode 120 and the negative electrode 140 to prevent short circuiting of the battery, while maintaining conductivity of the lithium ions serving as the charge carrier between the positive electrode 120 and the negative electrode 140. That is, the separator 130 has a function of separating the positive electrode 120 and the negative electrode 140, and a function of maintaining ionic conductivity of lithium ions. The separator 130 also plays a role in retaining the electrolytic solution. The separator 130 is not particularly limited as long as the separator 130 has the functions mentioned above, and examples of the separator 130 include a porous component having insulating properties, a polymer electrolyte, and a gel electrolyte.

When the separator includes a porous component having insulating properties, the component exhibits ionic conductivity by filling pores of the component with a material having ionic conductivity. Examples of the material to be filled include the above-described electrolytic solution, polymer electrolyte, and gel electrolyte.

As the separator 130, the porous component having insulating properties, the polymer electrolyte, or the gel electrolyte can be used alone or in combinations of two or more.

Examples of a material constituting the above-described porous component having insulating properties include, but are not limited to, an insulating polymer material, and specific examples thereof include polyethylene (PE) and polypropylene (PP). That is, the separator 130 may be a porous polyethylene (PE) film, a porous polypropylene (PP) film, or a laminated structure thereof.

The polymer electrolyte or the gel electrolyte in the separator 130 is not particularly limited as long as the polymer electrolyte or the gel electrolyte is generally used for lithium secondary batteries, and a known material can be appropriately selected. A polymer constituting the polymer electrolyte or the gel electrolyte is not particularly limited, and examples of the polymer include resins having an ethylene oxide unit such as polyethylene oxide (PEO) in the main chain and/or side chain, acrylic resins, vinyl resins, ester resins, nylon resins, polyvinylidene fluoride (PVDF), polyacrylonitrile (PAN), polysiloxane, polyphosphazene, poly(methyl methacrylate), polyamide, polyimide, aramid, polylactic acid, polyethylene, polystyrene, polyurethane, polypropylene, polybutylene, polyacetal, polysulfone, and polytetrafluoroethylene. These polymers can be used alone or in combinations of two or more. In addition, the polymer electrolyte and the gel electrolyte may contain the same components as the above-described electrolytic solution.

The separator 130 may be coated with a separator coating layer. The separator coating layer can be applied to one or both sides of the separator 130. The separator coating layer is not particularly limited as long as it does not react with lithium ions. The separator coating layer preferably bonds the separator 130 to the adjacent layer firmly. Examples of such a separator coating layer include, but are not limited to, a layer containing a binder such as polyvinylidene fluoride (PVDF), styrene butadiene rubber and carboxymethyl cellulose (SBR-CMC) mixtures, polyacrylic acid (PAA), lithium polyacrylate (Li-PAA), polyimide (PI), polyamideimide (PAI), and aramids. The separator coating layer may contain inorganic particles such as silica, alumina, titania, zirconia, magnesium oxide, magnesium hydroxide, and lithium nitrate in the above-described binder.

The average thickness of the separator 130 is preferably 20 µm or less, more preferably 18 µm or less, and even more preferably 15 µm or less. Because the volume occupied by the separator 130 in the lithium secondary battery 100 is reduced in this aspect of the present invention, the energy density of the lithium secondary battery 100 is further improved. The average thickness of the separator 130 is also preferably 5 µm or more, more preferably 7 µm or more, and even more preferably 10 µm or more. In this aspect of the present invention, the positive electrode 120 and the negative electrode 140 can be separated more reliably, and short circuiting of the battery can be further suppressed.

### (Use of Lithium Secondary Battery)

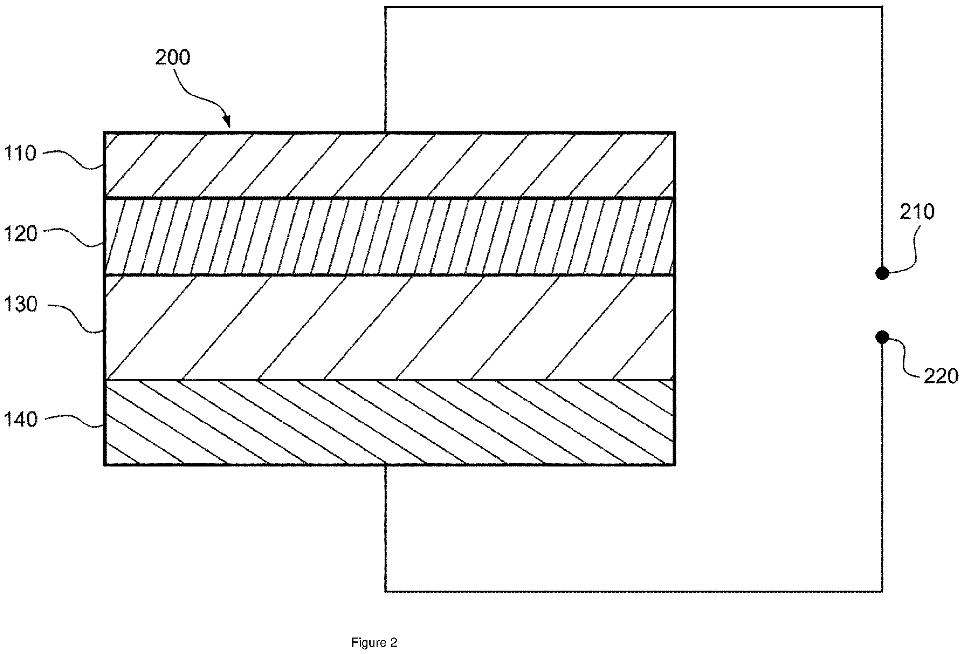

Fig. 2 illustrates one use aspect of the lithium secondary battery in the embodiment. The lithium secondary battery 200 has a positive electrode terminal 210 and a negative electrode terminal 220 for connecting the lithium secondary battery 200 to an external circuit and these terminals are connected to a positive electrode current collector 110 and the negative electrode 140, respectively. The lithium secondary battery 200 is charged and discharged by connecting the negative electrode terminal 220 to one end of the external circuit and connecting the positive electrode terminal 210 to the other end of the external circuit.

The lithium secondary battery 200 is charged by applying voltage between the positive electrode terminal 210 and the negative electrode terminal 220 so that current flows from the negative electrode terminal 220 to the positive electrode terminal 210 via the external circuit. In the lithium secondary battery 200, it is presumed that a solid electrolyte interphase layer (SEI layer) is formed on the surface of the negative electrode 140 (at the interface between the negative electrode 140 and the separator 130) by initial charging, but the lithium secondary battery 200 may not have the SEI layer. By charging the lithium secondary battery 200, the lithium metal is deposited on the interface between the negative electrode 140 and the SEI layer, on the interface between the negative electrode 140 and the separator 130, and/or on the interface between the SEI layer and the separator 130.

When the positive electrode terminal 210 and the negative electrode terminal 220 in the charged lithium secondary battery 200 are connected, the lithium secondary battery 200 is discharged. As a result, the deposition of the lithium metal generated on the negative electrode is electrolytically dissolved. When the SEI layer is formed in the lithium secondary battery 200, the deposition of lithium metal generated at least at the interface between the negative electrode 140 and the SEI layer and/or the interface between the SEI layer and the separator 130 is electrolytically dissolved.

### (Lithium Secondary Battery Production Method)

There are no particular restrictions on the method used to produce the lithium secondary battery 100 shown in Fig. 1 as long as it can produce a lithium secondary battery with the configuration described above. The following method is an example.

The positive electrode current collector 110 and the positive electrode 120 may be produced in the following manner. Such a positive electrode active material as mentioned above, a known conductive aid, and a known binder are mixed together to obtain a positive electrode mixture. The mixing ratio may be, for example, 50% by mass or more and 99% by mass or less of the positive electrode active material, 0.5% by mass or more and 30% by mass or less of the conductive aid, and 0.5% by mass or more and 30% by mass or less of the binder relative to the entire mass of the positive electrode mixture. The resulting positive electrode mixture is applied to one surface of a metal foil (for example, Al foil) as a positive electrode current collector, that has a predetermined thickness (for example, 5 µm or more and 1 mm or less), and then press-molded. The resulting molded material is punched to a predetermined size to obtain a positive electrode current collector 110 and a positive electrode 120.

Next, a negative electrode material, such as metal foil (such as electrolytic Cu foil) with a thickness of 1 µm or more and 1 mm or less, is washed with a solvent containing sulfamic acid, punched out to a predetermined size, washed again ultrasonically with ethanol, and then dried to obtain the negative electrode 140.

Next, the separator 130 with the configuration described above is prepared. The separator 130 may be produced using any method common in the art, or a commercially available one may be used.

Next, a solution obtained by mixing at least one kind of the fluorine compound and the ether co-solvent described above, and as necessary, the above-described fourth fluorine solvent and/or non-ether co-solvent is prepared as a solvent, and the electrolytic solution is prepared by dissolving a lithium salt in this solution. The mixing ratio of the solvent and the lithium salt may be appropriately adjusted so that the amount or concentration of each solvent and lithium salt in the electrolytic solution is within the above-described ranges.

The positive electrode current collector 110 on which the positive electrode 120 is formed, the separator 130, and the negative electrode 140 obtained as described above are laminated in this order such that the positive electrode 120 faces the separator 130 to obtain a laminate. The resulting laminate is then sealed in a sealed container together with the electrolytic solution to obtain the lithium secondary battery 100. There are no particular restrictions on the sealed container. Examples of the sealed container include a laminated film.

### [Second Embodiment]

### (Lithium Secondary Battery)

Same as the lithium secondary battery 100 in the first embodiment, the lithium secondary battery in the second embodiment includes a positive electrode current collector, a positive electrode, a negative electrode that is free of a negative electrode active material, and a separator that is disposed between the positive electrode and the negative electrode. In addition, same as the lithium secondary battery 100, the lithium secondary battery in the second embodiment includes an electrolytic solution.

Except for points described below, the configurations and preferred aspects of the positive electrode current collector, the positive electrode, the separator, and the negative electrode are the same as those of the lithium secondary battery 100 in the first embodiment. With these configurations, the lithium secondary battery in the second embodiment exhibits the same effects as the lithium secondary battery in the first embodiment, or exhibits further performance.

The lithium secondary battery in the second embodiment is different from the lithium secondary battery in the first embodiment in that the electrolytic solution has a composition described in detail below.

### (Electrolytic Solution)

The electrolytic solution in the lithium secondary battery in the second embodiment contains a lithium salt, a fluorine compound having a monovalent group represented by Formula (A) or Formula (B), and a chain-like ether compound that is free of a fluorine atom and has a branched chain.

Because the lithium secondary battery in the second embodiment has this electrolytic solution, the safety is further improved.

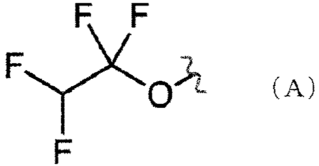

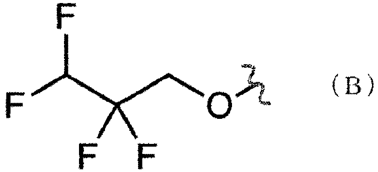

In the formulae, a wavy line represents a bonding site in the monovalent group.

The electrolytic solution in the embodiment contains a chain-like ether compound that is free of a fluorine atom and has a branched chain. The chain-like ether compound having a branched chain tends to have a higher boiling point and a lower vapor pressure than a linear ether compound having no branched chain, and the chain-like ether compound having a branched chain tends to have lower volatility. It is considered that this is because the chain-like ether compound having a branched chain tends to have a large bias of electrons in the molecule, thereby having a higher polarity, as compared with an ether compound having no branched chain. Therefore, in the lithium secondary battery in the embodiment, even when repeatedly charged and discharged, the volume expansion is suppressed, and the safety is further improved. However, the suppressive factors are not limited to those described above.

The chain-like ether compound that is free of a fluorine atom and has a branched chain is a compound having an ether bond. The ether compound makes the lithium ionic conductivity of the electrolytic solution sufficient, and tends to improve the solubility of the electrolyte. Therefore, the electrolytic solution in the embodiment has high ionic conductivity of lithium ions, and the lithium secondary battery has more excellent cycle characteristics and rate characteristics. The chain-like ether compound having a branched chain tends to have a strong coordination bond with the electrolyte and a low electron density in the molecule. By containing this compound, the affinity with the above-described fluorine compound is increased, and the compatibility in the electrolytic solution is also improved.

In the lithium secondary battery in the embodiment, the electrolytic solution further contains the fluorine compound having a monovalent group represented by Formula (A) or Formula (B) described above. As described above, this fluorine compound facilitates the formation of the SEI layer during charging, particularly during initial charging of the lithium secondary battery, and the lithium secondary battery has excellent cycle characteristics and rate characteristics.

Therefore, by using a plurality of solvent components exhibiting the above-described characteristics in combination, the lithium secondary battery in the embodiment has excellent safety in addition to cycle characteristics and rate characteristics.

In the present specification, the "branched chain" means a group other than a hydrogen atom, which is bonded to a main chain in a case where the longest molecular chain composed of carbon atoms and oxygen atoms is used as the main chain in the molecular structure. In addition, the "having a branched chain" means having at least one of the above-described branched chains in the molecular structure, and the compound having a branched chain indicates a branched structure. On the other hand, a chain-like compound having no branched chain is expressed as a "linear" compound in the embodiment. In addition, in the present specification, among chain-like ether compounds having no fluorine atom, a compound having a branched chain is particularly referred to as a "chain-like ether compound", and a compound having no branched chain is particularly referred to as a "linear ether compound".

In the embodiment, the chain-like ether compound that is free of a fluorine atom and has a branched chain (chain-like ether compound) is not particularly limited, and examples of the chain-like ether compound include 1,1-dimethoxyethane, 1,2-dimethoxypropane, 2,2-dimethoxypropane, 1,3-dimethoxybutane, 1,2-dimethoxybutane, 2,2-dimethoxybutane, 2,3-dimethoxybutane, 1,2-diethoxypropane, 1,2-diethoxybutane, 2,3-diethoxybutane, and diethoxyethane. Among these, 1,2-dimethoxypropane, 2,2-dimethoxypropane, or 2,2-dimethoxybutane is more preferable.

As the chain-like ether compound, from the standpoint of making the effect of the chain-like ether compound in the electrolytic solution more effective and reliable, a compound having 1, 2, 3, 4, 5, 6, 7, or 8 ether bonds is preferable.

The number of carbon atoms in the chain-like ether compound is not particularly limited as long as it exhibits sufficient solubility in the electrolyte, and is, for example, 4 or more and 15 or less. From the standpoint of further improving the solubility of the electrolyte in the electrolytic solution, the number of carbon atoms in the chain-like ether compound is preferably 4 or more, 5 or more, 6 or more, or 7 or more. In addition, from the same standpoint, the number of carbon atoms in the chain-like ether compound is preferably 14 or less, 12 or less, 10 or less, 9 or less, or 8 or less.

Furthermore, the number of carbon atoms in the branched chain of the chain-like ether compound is not particularly limited, and is, for example, 1 or more and 15 or less. From the standpoint of further improving the solubility of the electrolyte in the electrolytic solution and further improving the safety of the lithium secondary battery, the number of carbon atoms in the branched chain of the chain-like ether compound is preferably 1 or more, 2 or more, 3 or more, or 4 or more. In addition, from the same standpoint, the number of carbon atoms in the branched chain of the chain-like ether compound is preferably 14 or less, 12 or less, 10 or less, 9 or less, or 8 or less.

In the second embodiment, examples of the fluorine compound include compounds same as the fluorine compound in the first embodiment. From the standpoint of further improving solubility of the electrolyte in the electrolytic solution and from the standpoint that the SEI layer is more easily formed, the fluorine compound is preferably an ether compound same as described above.

In addition, the number of carbon atoms in the fluorine compound and the content ratio of fluorine atoms (F/(H + F)) are not particularly limited as long as it exhibits sufficient solubility in the electrolyte, and examples thereof include the same numbers as in the first embodiment. In addition, from the same standpoint as in the first embodiment, such a number is preferable.

Examples of the fluorine compound include the first fluorine solvent, the second fluorine solvent, and the third fluorine solvent same as described above. In addition, preferred aspects of the compounds in the first fluorine solvent, the second fluorine solvent, and the third fluorine solvent, and the effects thereof are the same as those of the electrolytic solution in the first embodiment.

It is sufficient that the electrolytic solution in the second embodiment contains at least one type of fluorine compound. From the standpoint of further improving solubility of the electrolyte in the electrolytic solution and from the standpoint that the SEI layer is more easily formed, the electrolytic solution preferably contains two or more types of fluorine compounds. From the same standpoint, the electrolytic solution preferably contains at least one kind selected from the group consisting of the first fluorine solvent, the second fluorine solvent, and the third fluorine solvent, and more preferably contains at least two kinds selected from the group consisting of the first fluorine solvent, the second fluorine solvent, and the third fluorine solvent. The electrolytic solution in the second embodiment particularly preferably contains the first fluorine solvent or the second fluorine solvent.

When the electrolytic solution contains two or more kinds of the first fluorine solvent, the second fluorine solvent, and the third fluorine solvent, the preferred amount of each solvent in the overall amount of the fluorine compound is the same as that of the electrolytic solution in the first embodiment.

In the embodiment, it is preferable that the electrolytic solution further contains a chain-like ether compound that is free of a fluorine atom and is free of a branched chain (linear ether compound). By containing the linear ether compound, because the solubility of the electrolyte in the electrolytic solution is further improved, the ionic conductivity in the electrolytic solution is high, and as a result, the lithium secondary battery in the embodiment has more excellent cycle characteristics.

Examples of the linear ether compound include, but are not limited to, ethylene glycol dimethyl ether, triethylene glycol dimethyl ether, diethylene glycol dimethyl ether, 1,2-dimethoxyethane, 1,3-dimethoxypropane, and 1,4-dimethoxybutane. From the standpoint of further improving solubility of the electrolyte in the electrolytic solution, as the linear ether compound, a compound having 1, 2, 3, 4, 5, 6, 7, or 8 ether bonds is preferable, and 1,2-dimethoxyethane is more preferable.

The number of carbon atoms in the linear ether compound is not particularly limited as long as it exhibits sufficient solubility in the electrolyte, and is, for example, 2 or more and 15 or less. From the standpoint of further improving the solubility of the electrolyte in the electrolytic solution, the number of carbon atoms in the linear ether compound is preferably 3 or more, 4 or more, 5 or more, or 6 or more. In addition, from the same standpoint, the number of carbon atoms in the chain-like ether compound is preferably 7 or less, 9 or less, 10 or less, 11 or less, or 13 or less.

It is sufficient that the electrolytic solution in the second embodiment contains at least one type of chain-like ether compound. From the standpoint of further improving solubility of the electrolyte in the electrolytic solution, it is preferable that the electrolytic solution contains at least one type of chain-like ether compound and further contains at least one type of linear ether compound.

The electrolytic solution may further contain a compound (solvent) other than the chain-like ether compound, linear ether compound, and fluorine compound described above. Examples of such a compound include, but are not limited to, a compound that has a fluorine atom and is free of any monovalent group represented by Formula (A) or Formula (B) (fourth fluorine solvent), an ether compound having a cyclic structure ("cyclic ether compound"), and a compound that is free of a fluorine atom and is free of an ether bond (non-ether co-solvent).

In the second embodiment, examples of the fourth fluorine solvent and the non-ether co-solvent include the same compounds as the fourth fluorine solvent and the non-ether co-solvent in the first embodiment, respectively.

In the embodiment, examples of the cyclic ether compound include, but are not limited to, tetrahydrofuran, tetrahydropyran, dioxolane, dioxane, 4-methyl-1,3-dioxane, oxetane, hexamethylene oxide, 1,2-bis(methoxycarbonyloxy)ethane, 1,2-bis(ethoxycarbonyloxy)ethane, and 1,2-bis(ethoxycarbonyloxy)propane.

The number of carbon atoms in the cyclic ether compound is not particularly limited, but is, for example, 3 or more and 40 or less. In addition, the number of ether bonds in the cyclic ether compound is not particularly limited, but is, for example, 1 or more and 8 or less.

The amount of the chain-like ether compound in the electrolytic solution of the embodiment is not particularly limited, but relative to the overall amount of solvent components in the electrolytic solution, it is preferably more than 0% by volume, 0.1% by volume or more, 5% by volume or more, 10% by volume or more, 15% by volume or more, or 20% by volume or more. The upper limit of the amount of the chain-like ether compound is not particularly limited, and the amount of the chain-like ether compound may be 60% by volume or less, 55% by volume or less, 50% by volume or less, 45% by volume or less, 40% by volume or less, or 35% by volume or less. In a case where the amount of the chain-like ether compound is within the above-described range, the lithium secondary battery is excellent in safety, and the cycle characteristics of the battery tend to be further improved.

The amount of the linear ether compound in the electrolytic solution of the embodiment is not particularly limited, but relative to the overall amount of solvent components in the electrolytic solution, it is preferably 0% by volume, more than 0% by volume, more than 0% by volume, 0.1% by volume or more, 1% by volume or more, 2% by volume or more, 3% by volume or more, 5% by volume or more, 10% by volume or more, 15% by volume or more, or 20% by volume or more. The upper limit of the amount of the linear ether compound is not particularly limited, and the amount of the linear ether compound may be 60% by volume or less, 50% by volume or less, 40% by volume or less, 30% by volume or less, 25% by volume or less, or 20% by volume or less. In a case where the amount of the linear ether compound is within the above-described range, the cycle characteristics of the battery tend to be further improved.

In the second embodiment, the amount of the fluorine compound in the electrolytic solution is not particularly limited, but relative to the overall amount of solvent components in the electrolytic solution, it is preferably 30% by volume or more, 35% by volume or more, 40% by volume or more, 45% by volume or more, 50% by volume or more, 55% by volume or more, 60% by volume or more, 65% by volume or more, or 70% by volume or more. The upper limit of the amount of the fluorine compound is not particularly limited, and the amount of the fluorine compound may be less than 100% by volume, 98% by volume or less, 95% by volume or less, 90% by volume or less, 85% by volume or less, or 80% by volume or less. In a case where the amount of the fluorine compound is within the above-described range, the cycle characteristics of the battery tend to be further improved.

The amount of the fourth fluorine solvent in the electrolytic solution of the second embodiment is not particularly limited, but for example, relative to the overall amount of the solvent components in the electrolytic solution, it may be 0% by volume, more than 0% by volume, 5% by volume or more, 10% by volume or more, or 15% by volume or more. The upper limit of the amount of the fourth fluorine solvent is not particularly limited, and the amount of the fourth fluorine solvent may be 40% by volume or less, 35% by volume or less, 30% by volume or less, 25% by volume or less, 20% by volume or less, or 15% by volume or less relative to the overall amount of the solvent components in the electrolytic solution.

The amount of the cyclic ether compound and the non-ether co-solvent in the electrolytic solution of the embodiment is not particularly limited, but for example, relative to the overall amount of the solvent components in the electrolytic solution, the amount of the cyclic ether compound and the non-ether co-solvent may be 0% by volume, more than 0% by volume, 5% by volume or more, 10% by volume or more, or 15% by volume or more. In addition, the total amount of the cyclic ether compound and the non-ether co-solvent may be 50% by volume or less, 40% by volume or less, 30% by volume or less, 25% by volume or less, 20% by volume or less, 15% by volume or less, or 10% by volume or less. The electrolytic solution of the embodiment may contain both the cyclic ether compound and the non-ether co-solvent, or may contain only one of them.

The fluorine solvent described in Table 1 and the ether solvent described in Table 2 can also be used in the second embodiment. However, the types of compounds that can be used as the solvent are not limited thereto.

Examples of lithium salt contained in the electrolytic solution of the second embodiment include the same lithium salts as those contained in the electrolytic solution of the first embodiment. From the standpoint of further improving the energy density and cycle characteristics of the lithium secondary battery, LiN(SO₂F)₂ is preferable as the lithium salt in the embodiment. The lithium salt can be used alone or in combinations of two or more.

The electrolytic solution may further contain a salt other than the lithium salt as the electrolyte. Examples of such a salt include salts of Na, K, Ca, or Mg.

The concentration of the lithium salt in the electrolytic solution in the second embodiment is not particularly limited, but is preferably 0.5 M or more, more preferably 0.7 M or more, even more preferably 0.9 M or more, and still more preferably 1.0 M or more. When the concentration of the lithium salt is within the above-described range, the SEI layer is more easily formed and the internal resistance tends to be further lowered. In particular, in the lithium secondary battery containing the fluorine compound as the solvent, the concentration of the lithium salt in the electrolytic solution can be increased, so that the cycle characteristics and rate capability can be further improved. The upper limit of the concentration of the lithium salt is not particularly limited, and the concentration of the lithium salt may be 10.0 M or less, 5.0 M or less, or 2.0 M or less.

The fact that the electrolytic solution contains the fluorine compound, the chain-like ether compound, and/or the linear ether compound can be confirmed by any method common in the art. Examples of such a method include an NMR measurement method, a mass analysis method such as HPLC-MS, and an IR measurement method.

### (Lithium Secondary Battery Production Method)

The lithium secondary battery in the second embodiment can be produced in the same manner as the method used to produce the lithium secondary battery in the first embodiment described above, except for a step of preparing an electrolytic solution.

In addition, in the preparation of the electrolytic solution, a solution obtained by mixing at least one kind of the above-described chain-like ether compound, at least one kind of the above-described fluorine compound, and as necessary, one or more compounds selected from the group consisting of the linear ether compound, the fourth fluorine solvent, the cyclic ether compound, and the non-ether co-solvent described above is prepared as a solvent, and an electrolytic solution is prepared by dissolving an electrolyte such as lithium salt in the solution. The mixing ratio of the solvent and the electrolyte may be appropriately adjusted so that the type of each solvent and electrolyte, and the amount or concentration in the electrolytic solution are within the above-described ranges.

### [Modification Example]

The embodiments described above are provided merely to explain the present invention and are not intended to limit the present invention to the embodiments. Various modifications are possible without departing from the scope and spirit of the present invention.

For example, in the lithium secondary battery in the embodiment, each component may not be formed as a laminate, but may be fixed at a distance and filled with the electrolytic solution.

In the lithium secondary battery in the embodiment, for example, an auxiliary member that assists the deposition and/or dissolution of lithium metal between the separator and the negative electrode during charging and discharging may be provided. Examples of such an auxiliary member include members containing a metal that is alloyed with the lithium metal, and may be, for example, a metal layer formed on the surface of the negative electrode. Examples of such a metal layer include layers containing at least one selected from the group consisting of Si, Sn, Zn, Bi, Ag, In, Pb, Sb, and Al. The average thickness of the metal layer may be, for example, 5 nm or more and 500 nm or less.

In this aspect of including the above-described auxiliary member in the lithium secondary battery, because affinity between the negative electrode and the lithium metal deposited on the negative electrode is further improved, peeling of the lithium metal deposited on the negative electrode is further suppressed, and the cycle characteristics tend to be further improved. The auxiliary member may contain the metal that is alloyed with the lithium metal, but the capacity thereof is sufficiently smaller than the capacity of the positive electrode. In a typical lithium ion secondary battery, the capacity of the negative electrode active material contained in the negative electrode is set to be about the same as the capacity of the positive electrode, but because the capacity of the auxiliary member is sufficiently smaller than the capacity of the positive electrode, the lithium secondary battery including such an auxiliary member can be said to "include a negative electrode that is free of a negative electrode active material". Therefore, the capacity of the auxiliary member may be sufficiently smaller than the capacity of the positive electrode, and may be, for example, 20% or less, 15% or less, 10% or less, or 5% or less.

In the lithium secondary batteries described in the embodiments, a current collector may be provided on the surface of the negative electrode disposed so as to be in contact with the negative electrode. Examples of such a current collector include, but are not limited to, those that can be used for the negative electrode material. When the lithium secondary battery has neither a positive electrode current collector nor a negative electrode current collector, the positive electrode or the negative electrode itself serves as a current collector, respectively.

On the surface of the negative electrode in the lithium secondary battery in the embodiment, a part or all of the surface facing the separator may be coated with a coating agent. Examples of the negative electrode coating agent include benzotriazole (BTA), imidazole (IM), triazinethiol (TAS), and derivatives of these compounds. For example, after cleaning the above-described negative electrode material, the negative electrode material is immersed in a solution containing the negative electrode coating agent (for example, a solution in which the negative electrode coating agent is contained in an amount of 0.01% by volume or more and 10% by volume or less), and dried in the atmosphere, whereby the negative electrode material can be coated with the negative electrode coating agent. It is presumed that the coating of the above-described compound suppresses non-uniform deposition of lithium metal on the surface of the negative electrode and suppresses the growth of dendritic lithium metal deposited on the negative electrode.

In the lithium secondary batteries described in the embodiments, a terminal for connecting to an external circuit may be attached to the positive electrode current collector and/or the negative electrode. For example, a metal terminal (for example, Al, Ni, and the like) of 10 µm or more and 1 mm or less may be connected to one or both of the positive electrode current collector and the negative electrode. As the connecting method, any method common in the art may be used, and for example, ultrasonic welding may be used.

In the present specification, "the energy density is high" and "high energy density" mean the capacity is high relative to the total volume or total mass of the battery. This is preferably 800 Wh/L or more or 350 Wh/kg or more, more preferably 900 Wh/L or more or 400 Wh/kg or more, and even more preferably 1000 Wh/L or more or 450 Wh/kg or more.

In the present specification, "excellent cycle characteristics" means that the rate of decline in battery capacity is low before and after the number of times of charging and discharging cycles that can be expected during normal use. In other words, when comparing a first discharge capacity after initial charging and discharging to a discharge capacity after the number of times of charging and discharging cycles that can be expected during normal use, the capacity after the charging and discharging cycles has not declined significantly relative to the first discharge capacity after the initial charging and discharging. Here, "the number of times that can be expected during normal use" can be, for example, 30 times, 50 times, 70 times, 100 times, 300 times, or 500 times, depending on the application for the lithium secondary battery. In addition, the "capacity after the charging and discharging cycles not declining significantly relative to the first discharge capacity after the initial charging and discharging" depends on the application for the lithium secondary battery. For example, it may be 60% or more, 65% or more, 70% or more, 75% or more, 80% or more, or 85% or more of the first discharge capacity after the initial charging and discharging.

In the present specification, a numerical range described as a preferred range or the like may be replaced with a numerical range obtained by arbitrarily combining the described upper limit value and lower limit value. For example, in a case where a certain parameter is preferably 50 or more and more preferably 60 or more, and is preferably 100 or less and more preferably 90 or less, the parameter may be any of 50 or more and 100 or less, 50 or more and 90 or less, 60 or more and 100 or less, or 60 or more and 90 or less.

### Examples

The following is a more detailed description of the present invention with reference to examples and comparative examples. The present invention is not limited in any way by these test examples.

### [Test Example 1]

### [Example 1]

A lithium secondary battery of Example 1 was produced as follows.

### (Preparation of Negative Electrode)

First, a 10 µm electrolytic Cu foil was washed with a solvent containing sulfamic acid, punched to a predetermined size (45 mm × 45 mm), washed ultrasonically with ethanol, and then dried to obtain a Cu foil, which was used as a negative electrode.

### (Production of Positive Electrode)

A positive electrode was produced. A mixture of 96 parts by mass LiNi_{0.85}Co_{0.12}Al_{0.03}O₂ positive electrode active material, 2 parts by mass carbon black conductive aid, and 2 parts by mass polyvinylidene fluoride (PVDF) binder was applied to one surface of 12 µm-thick Al foil and press-molded. The resulting molded material was punched to a predetermined size (40 mm × 40 mm) to obtain a positive electrode.

### (Preparation of Separator)

As a separator, a separator having a predetermined size (50 mm × 50 mm), in which both surfaces of a 12 µm-thick polyethylene microporous film were coated with a 2 µm-thick polyvinylidene fluoride (PVDF), was prepared.

### (Preparation of Electrolytic Solution)

An electrolytic solution was prepared as follows. 60% by volume of 1,1,2,2-tetrafluoroethyl-2,2,3,3-tetrafluoropropyl ether and 40% by volume of ethylene glycol dimethyl ether were mixed with each other. An electrolytic solution was obtained by dissolving LiN(SO₂F)₂ in the resulting mixed solution so as to have a molar concentration of 1.3 M.

### (Assembly of Battery)

The positive electrode current collector on which the positive electrode was formed, the separator, and the negative electrode obtained as described above were laminated in this order such that the positive electrode faced the separator to obtain a laminate. A 100 µm-thick Al terminal and a 100 µm-thick Ni terminal were connected to the positive electrode current collector and the negative electrode by ultrasonic welding, respectively, and then the laminate is inserted into a laminated outer casing. Next, the electrolytic solution obtained as described above was injected into the outer casing. The outer casing was then sealed to obtain a lithium secondary battery.

### [Examples 2 to 62]

Lithium secondary batteries were obtained in the same manner as in Example 1, except that the electrolytic solutions were prepared using the solvents and electrolytes (lithium salts) described in Tables 3 to 6.

In Tables 3 to 7, "TTFE" represents
1,1,2,2-tetrafluoroethyl-2,2,3,3-tetrafluoropropyl ether, "TFEE" represents
1,1,2,2-tetrafluoroethyl-2,2,2-trifluoroethyl ether, "ETFE" represents ethyl-1,1,2,2-tetrafluoroethyl ether, "TFME" represents methyl-1,1,2,2-tetrafluoroethyl ether, "OFTFE" represents 1H,1H,5H-octafluoropentyl-1,1,2,2-tetrafluoroethyl ether, "DFTFE" represents difluoromethyl-2,2,3,3-tetrafluoropropyl ether, "NV7100" represents methyl nonafluorobutyl ether, "NV7200" represents ethyl nonafluorobutyl ether, and "NV7300" represents
1,1,1,2,2,3,4,5,5,5-decafluoro-3-methoxy-4-trifluoromethylpentane. In addition, "DME" represents 1,2-dimethoxyethane, "DGM" represents diethylene glycol dimethyl ether, and "TGM" represents triethylene glycol dimethyl ether. Regarding the lithium salt used as the electrolyte, "FSI" represents LiN(SO₂F)₂, and "LiDFOB" represents LiBF₂(C₂O₄).

In Tables 3 to 7, each solvent is classified into any of the first fluorine solvent, the second fluorine solvent, the third fluorine solvent, the fourth fluorine solvent, or the co-solvent including the ether co-solvent and the non-ether co-solvent, according to the definitions described above. In the tables, for example, the first fluorine solvent is described as "First". In addition, in the tables, each solvent is described in terms of amount as % by volume together with its type, and each lithium salt is described in terms of concentration as volume molar concentration (M) together with its type. For example, in Example 1, it is described that 60% by volume of TTFE and 40% by volume of DME were contained as the solvent, and 1.3 M FSI was contained as the electrolyte.

### [Comparative Examples 1 and 2]

Lithium secondary batteries were obtained in the same manner as in Example 1, except that the electrolytic solutions were prepared using the solvents and electrolytes (lithium salts) described in Table 7. In Comparative Examples 1 and 2, the fluorine compound was not contained, and the co-solvent was only contained as the solvent.

### [Evaluation of Cycle Characteristics]

The cycle characteristics of the lithium secondary batteries produced in the examples and the comparative examples were evaluated as follows.

The produced lithium secondary battery was CC-charged at 3.2 mA until the voltage reached 4.2 V (initial charging), and then CC-discharged at 3.2 mA until the voltage reached 3.0 V ("initial discharging"). Then, a cycle of CC-charging at 13.6 mA until the voltage reached 4.2 V and then CC-discharging at 20.4 mA until the voltage reached 3.0 V was repeated at a temperature of 25°C. Tables 3 to 7 show the capacity ("initial capacity"; described as "Capacity" in the tables) obtained from the initial discharging for each example. For the examples, the number of cycles (referred to as "Cycle" in the table) when the discharge capacity reached 80% of the initial capacity is shown in Tables 3 to 7.

### [Measurement of Direct Current Resistance]

The produced lithium secondary battery was CC-charged at 5.0 mA to 4.2 V, and then CC-discharged at 30 mA, 60 mA, and 90 mA for 30 seconds, respectively. At this time, the lower limit voltage was set to 2.5 V, but in any of the examples, the voltage did not reach 2.5 V by the discharging for 30 seconds. In addition, between each discharging, CC-charging was performed again at 5.0 mA to 4.2 V, and the next CC-discharging was performed after the charging was completed. The direct current resistance (DCR) (unit: Ω) was obtained from the gradient of I-V characteristic obtained plotting a current value I and a voltage drop V obtained as described above, and linearly approximating each point. The results are shown in Tables 3 to 7.

**[Table 3]**

| | | Classification | Example 1 | Example 2 | Example 3 | Example 4 |
|---|---|---|---|---|---|---|
| Solvent (type: % by volume) | Fluorine solvent | First | TTFE:60 | TTFE:70 | TTFE:80 | TTFE:90 |
| | Co-solvent | 1 | DME:40 | DME:30 | DME:20 | DME:10 |
| Lithium salt (type: concentration (M)) | | 1 | FSI: 1.3M | FSI:1.0M | FSI: 1.3M | FSI:1.0M |
| Characteristics | | Capacity (mAh) | 68 | 67 | 68 | 67 |
| | | DCR (Ω) | 4.1 | 4.2 | 4.3 | 4.8 |
| | | Cycle (times) | 116 | 125 | 140 | 135 |
| | | Classification | Example 5 | Example 6 | Example 7 | Example 8 |
| Solvent (type: % by volume) | Fluorine solvent | Second | TFEE:60 | TFEE:70 | TFEE:80 | TFEE:90 |
| | Co-solvent | 1 | DME:40 | DME:30 | DME:20 | DME:10 |
| Lithium salt (type: concentration (M)) | | 1 | FSI: 2.0M | FSI: 1.5M | FSI: 1.2M | FSI: 1.0M |
| Characteristics | | Capacity (mAh) | 69 | 68 | 67 | 67 |
| | | DCR (Ω) | 3.6 | 3.65 | 3.7 | 3.76 |
| | | Cycle (times) | 143 | 155 | 164 | 169 |
| | | Classification | Example 9 | Example 10 | Example 11 | Example 12 |
| Solvent (type: % by volume) | Fluorine solvent | Second | ETFE:60 | ETFE:70 | ETFE:80 | ETFE:90 |
| | Co-solvent | 1 | DME:40 | DME:30 | DME:20 | DME:10 |
| Lithium salt (type: concentration (M)) | | 1 | FSI: 2.0M | FSI: 1.5M | FSI: 1.2M | FSI: 1.0M |
| Characteristics | | Capacity (mAh) | 69 | 68 | 67 | 67 |
| | | DCR (Ω) | 3.9 | 4 | 4.1 | 4.2 |
| | | Cycle (times) | 145 | 156 | 166 | 168 |
| | | Classification | Example 13 | Example 14 | Example 15 | Example 16 |
| Solvent (type: % by volume) | Fluorine solvent | Second | TFME:60 | TFME:70 | TFME:80 | TFME:90 |
| | Co-solvent | 1 | DME:40 | DME:30 | DME:20 | DME:10 |
| Lithium salt (type: concentration (M)) | | 1 | FSI: 2.0M | FSI: 1.5M | FSI: 1.2M | FSI: 1.0M |
| Characteristics | | Capacity (mAh) | 69 | 68 | 67 | 67 |
| | | DCR (Ω) | 3.96 | 3.98 | 3.99 | 4.05 |
| | | Cycle (times) | 144 | 146 | 147 | 152 |

**[Table 4]**

| | | Classification | Example 17 | Example 18 | Example 19 | Example 20 |
|---|---|---|---|---|---|---|
| Solvent (type: % by volume) | Fluorine solvent | Second | OFTFE:60 | OFTFE:70 | OFTFE:80 | OFTFE:90 |
| | Co-solvent | 1 | DME:40 | DME:30 | DME:20 | DME:10 |
| Lithium salt (type: concentration (M)) | | 1 | FSI: 2.0M | FSI: 1.5M | FSI: 1.2M | FSI: 1.0M |
| Characteristics | | Capacity (mAh) | 69 | 68 | 67 | 67 |
| | | DCR (Ω) | 4.05 | 4.11 | 4.15 | 4.16 |
| | | Cycle (times) | 144 | 146 | 147 | 152 |
| | | Classification | Example 21 | Example 22 | Example 23 | Example 24 |
| Solvent (type: % by volume) | Fluorine solvent | Third | DFTFE:60 | DFTFE:70 | DFTFE:80 | DFTFE:90 |
| | Co-solvent | 1 | DME:40 | DME:30 | DME:20 | DME:10 |
| Lithium salt (type: concentration (M)) | | 1 | FSI: 1.8M | FSI: 1.3M | FSI: 1.0M | FSI: 0.8M |
| Characteristics | | Capacity (mAh) | 69 | 68 | 67 | 67 |
| | | DCR (Ω) | 4.22 | 4.32 | 4.45 | 4.52 |
| | | Cycle (times) | 132 | 138 | 142 | 146 |
| | | Classification | Example 25 | Example 26 | Example 27 | Example 28 |
| Solvent (type: % by volume) | Fluorine solvent | Second | TFEE:60 | TFEE:70 | TFEE:80 | TFEE:90 |
| | Co-solvent | 1 | DGM:40 | DGM:30 | DGM:20 | DGM:10 |
| Lithium salt (type: concentration (M)) | | 1 | FSI: 1.9M | FSI: 1.4M | FSI: 1.1M | FSI: 0.9M |
| Characteristics | | Capacity (mAh) | 69 | 68 | 67 | 67 |
| | | DCR (Ω) | 3.7 | 3.84 | 3.88 | 3.91 |
| | | Cycle (times) | 147 | 158 | 168 | 171 |
| | | Classification | Example 29 | Example 30 | Example 31 | Example 32 |
| Solvent (type: % by volume) | Fluorine solvent | Second | TFEE:60 | TFEE:70 | TFEE:80 | TFEE:90 |
| | Co-solvent | 1 | TGM:40 | TGM:30 | TGM:20 | TGM:10 |
| Lithium salt (type: concentration (M)) | | 1 | FSI: 1.9M | FSI: 1.4M | FSI: 1.1M | FSI: 0.9M |
| Characteristics | | Capacity (mAh) | 69 | 68 | 67 | 67 |
| | | DCR (Ω) | 3.7 | 3.84 | 3.88 | 3.91 |
| | | Cycle (times) | 147 | 158 | 168 | 171 |

**[Table 5]**

| | | Classification | Example 33 | Example 34 | Example 35 | Example 36 | Example 37 | Example 38 |
|---|---|---|---|---|---|---|---|---|
| Solvent (type: % by volume) | Fluorine solvent | First | - | - | - | TTFE:10 | TTFE:10 | TTFE:10 |
| | | Second | TFEE:40 | TFEE:40 | TFEE:40 | TFEE:40 | TFEE:40 | TFEE:40 |
| | | | ETFE:40 | TFME:40 | OFTFE:40 | ETFE:40 | TFME:40 | OFTFE:40 |
| | Co-solvent | 1 | DME:20 | DME:20 | DME:20 | DME:10 | DME:10 | DME:10 |
| Lithium salt (type: concentration (M)) | | 1 | FSI:1.2M | FSI:1.2M | FSI:1.2M | FSI:1.1M | FSI:1.1M | FSI:1.1M |
| Characteristics | | Capacity (mAh) | 68 | 67 | 68 | 68 | 68 | 68 |
| | | DCR (Ω) | 3.82 | 3.84 | 3.93 | 4.01 | 4.05 | 4.08 |
| | | Cycle (times) | 173 | 174 | 177 | 166 | 168 | 176 |
| | | Classification | Example 39 | Example 40 | Example 41 | Example 42 | Example 43 | Example 44 |
| Solvent (type: % by volume) | Fluorine solvent | Second | TFEE:40 | TFEE:40 | TFEE:40 | TFEE:40 | TFEE:40 | TFEE:40 |
| | | | ETFE:40 | TFME:40 | OFTFE:40 | ETFE:40 | TFME:40 | OFTFE:40 |
| | | Fourth | - | - | - | NV7100:10 | NV7100:10 | NV7100:10 |
| | Co-solvent | 1 | DME:10 | DME:10 | DME:10 | DME:10 | DME:10 | DME:10 |
| | | 2 | TGM:10 | TGM:10 | TGM:10 | - | - | - |
| Lithium salt (type: concentration (M)) | | 1 | FSI:1.2M | FSI:1.2M | FSI:1.2M | FSI:1.1M | FSI:1.1M | FSI:1.1M |
| Characteristics | | Capacity (mAh) | 68 | 67 | 68 | 67 | 68 | 67 |
| | | DCR (Ω) | 3.77 | 3.78 | 3.67 | 3.55 | 3.65 | 3.54 |
| | | Cycle (times) | 174 | 178 | 179 | 175 | 174 | 173 |
| | | Classification | Example 45 | Example 46 | Example 47 | Example 48 | Example 49 | Example 50 |
| Solvent (type: % by volume) | Fluorine solvent | Second | TFEE:40 | TFEE:40 | TFEE:40 | TFEE:40 | TFEE:40 | TFEE:40 |
| | | | ETFE:40 | TFME:40 | OFTFE:40 | ETFE:40 | TFME:40 | OFTFE:40 |
| | | Fourth | NV7200:10 | NV7200:10 | NV7200:10 | NV7300:10 | NV7300:10 | NV7300:10 |
| | Co-solvent | 1 | DME:10 | DME:10 | DME:10 | DME:10 | DME:10 | DME:10 |
| Lithium salt (type: concentration (M)) | | 1 | FSI:1.1M | FSI:1.1M | FSI:1.1M | FSI:1.1M | FSI:1.1M | FSI:1.1M |
| Characteristics | | Capacity (mAh) | 68 | 68 | 67 | 68 | 68 | 68 |
| | | DCR (Ω) | 3.57 | 3.58 | 3.54 | 3.66 | 3.56 | 3.48 |
| | | Cycle (times) | 171 | 168 | 169 | 175 | 177 | 178 |

**[Table 6]**

| | | Classification | Example 51 | Example 52 | Example 53 | Example 54 | Example 55 | Example 56 |
|---|---|---|---|---|---|---|---|---|
| Solvent (type: % by volume) | Fluorine solvent | First | TTFE:10 | TTFE:10 | TTFE:10 | TTFE:10 | TTFE:10 | TTFE:10 |
| | | Second | TFEE:40 | TFEE:40 | TFEE:40 | TFEE:40 | TFEE:40 | TFEE:40 |
| | | | ETFE:30 | TFME:30 | OFTFE:30 | ETFE:20 | TFME:20 | OFTFE:20 |
| | | Third | - | - | - | DFTFE:10 | DFTFE:10 | DFTFE:10 |
| | | Fourth | NV7200:10 | NV7200:10 | NV7200:10 | NV7200:10 | NV7200:10 | NV7200:10 |
| | Co-solvent | 1 | DME:10 | DME:10 | DME:10 | DME:10 | DME:10 | DME:10 |
| Lithium salt (type: concentration (M)) | | 1 | FSI:1.1M | FSI:1.1M | FSI:1.1M | FSI:1.1M | FSI:1.1M | FSI:1.1M |
| Characteristics | | Capacity (mAh) | 68 | 68 | 67 | 68 | 66 | 68 |
| | | DCR (Ω) | 3.57 | 3.68 | 3.48 | 3.58 | 3.59 | 3.54 |
| | | Cycle (times) | 174 | 173 | 178 | 177 | 179 | 177 |
| | | Classification | Example 57 | Example 58 | Example 59 | Example 60 | Example 61 | Example 62 |
| Solvent (type: % by volume) | Fluorine solvent | First | TTFE:10 | TTFE:10 | TTFE:10 | TTFE:10 | TTFE:10 | TTFE:10 |
| | | Second | TFEE:40 | TFEE:40 | TFEE:40 | TFEE:40 | TFEE:40 | TFEE:40 |
| | | | ETFE:10 | TFME:10 | OFTFE:10 | ETFE:10 | TFME:10 | OFTFE:10 |
| | | Third | DFTFE:10 | DFTFE:10 | DFTFE:10 | DFTFE:10 | DFTFE:10 | DFTFE:10 |
| | | Fourth | NV7200:10 | NV7200:10 | NV7200:10 | NV7200:10 | NV7200:10 | NV7200:10 |
| | Co-solvent | 1 | DME:10 | DME:10 | DME:10 | DME:10 | DME:10 | DME:10 |
| | | 2 | TGM:10 | TGM:10 | TGM:10 | TGM:10 | TGM:10 | TGM:10 |
| Lithium salt (type: concentration (M)) | | 1 | FSI:1.1M | FSI:1.1M | FSI:1.1M | FSI:0.8M | FSI:0.8M | FSI:0.8M |
| | | 2 | - | - | - | LiDFOB:0.2M | LiDFOB:0.2M | LiDFOB:0.2M |
| Characteristics | | Capacity (mAh) | 67 | 68 | 67 | 68 | 68 | 68 |
| | | DCR (Ω) | 3.66 | 3.67 | 3.69 | 3.57 | 3.68 | 3.47 |
| | | Cycle (times) | 181 | 182 | 183 | 184 | 188 | 186 |

**[Table 7]**

| | | Classification | Comparative Example 1 | Comparative Example 2 |
|---|---|---|---|---|
| Solvent (type: % by volume) | Fluorine solvent | First | - | - |
| | | Second | - | - |
| | | Third | - | - |
| | | Fourth | - | - |
| | Co-solvent | 1 | DME:100 | DME:100 |
| | | 2 | - | - |
| Lithium salt (type: concentration (M)) | | 1 | FSI: 6.0M | FSI: 1.0M |
| | | 2 | - | - |
| Characteristics | | Capacity (mAh) | 68 | 67 |
| | | DCR (Ω) | 3.68 | 3.88 |
| | | Cycle (times) | 40 | 10 |

In Tables 5 to 7, "-" means that the corresponding component was not contained.

From Tables 3 to 7, in Examples 1 to 62 in which the fluorine compound having a monovalent group represented by Formula (A) or Formula (B) and the ether compound that was free of a fluorine atom were contained as the solvent, as compared with Comparative Examples 1 and 2 in which the compounds were not contained, it was found that the number of cycles was very high and the cycle characteristics were excellent. In addition, in Examples 1 to 62, it was found that the direct current resistance value was lower than the direct current resistance value expected from the very high cycle characteristics, and the direct current resistance value was equivalent to the direct current resistance values of Comparative Examples 1 and 2. From this, in Examples 1 to 62, it was found that the rate capability was also excellent with the excellent cycle characteristics.

### [Test Example 2]

### [Examples 63 to 70]

Lithium secondary batteries were obtained in the same manner as in Example 1, except that the electrolytic solutions were prepared using the solvents and electrolytes (lithium salts) described in Table 8.

In Tables 8 and 9, "TTFE" represents
1,1,2,2-tetrafluoroethyl-2,2,3,3-tetrafluoropropyl ether, "TFEE" represents 1,1,2,2-tetrafluoroethyl-2,2,2-trifluoroethyl ether, and "TFPNE" represents 1H,1H,5H-octafluoropentyl-1,1,2,2-tetrafluoroethyl ether. In addition, "1,2-DMP" represents 1,2-dimethoxypropane, "2,2-DMP" represents 2,2-dimethoxypropane, "2,2-DMB" represents 2,2-dimethoxybutane, "DME" represents 1,2-dimethoxyethane, and "TGM" represents triethylene glycol dimethyl ether. Regarding the lithium salt used as the electrolyte, "FSI" represents LiN(SO₂F)₂.

In Tables 8 and 9, each solvent is classified into any of the first fluorine solvent, the second fluorine solvent, the chain-like ether compound, or the linear ether compound, according to the definitions described above. In the tables, for example, the first fluorine solvent is described as "First", and the chain-like ether compound is described as "Chain-like". In addition, in the tables, each solvent is described in terms of amount as % by volume together with its type, and the lithium salt is described in terms of concentration as volume molar concentration (M) together with its type. For example, in Example 63, it is described that 80% by volume of TTFE and 20% by volume of 1,2-DMP were contained as the solvent, and 1.0 M FSI was contained as the electrolyte.

### [Reference Comparative Example 3 and Comparative Example 4]

Lithium secondary batteries were obtained in the same manner as in Example 1, except that the electrolytic solutions were prepared using the solvents and lithium salts described in Table 8. In Reference Comparative Example 3 and Comparative Example 4, the chain-like ether compound that was free of a fluorine atom and had a branched chain was not contained, and in particular, only the linear ether compound was contained as the ether compound that was free of a fluorine atom.

### [Evaluation of Cycle Characteristics]

The cycle characteristics of the produced lithium secondary battery were evaluated by the same method as in Test Example 1.

### [Measurement of Volume Expansion Rate]

The volume expansion rate of the lithium secondary batteries produced in the examples and the comparative examples was evaluated as follows.

For each example, the thickness of the cell immediately after the production and the thickness of the cell after 100th charging after 99 times of the charging and discharging cycle were each measured using a microgauge, and the volume expansion rate accompanying charging and discharging was measured.

Table 8 shows the volume expansion rate of the cell after 100th charging with respect to the cell immediately after the production (expansion proportion of the cell after 100th charging with respect to the thickness of the cell immediately after the production) as "Volume expansion rate (%)".

### [Evaluation of Rate Characteristics]

The rate characteristics of the lithium secondary batteries produced in the examples and the comparative examples were evaluated as follows.

The produced lithium secondary battery was CC-charged at 3.0 mA to 4.2 V, and then CC-discharged at a discharging rate of 0.05 C, 0.1 C, 0.5 C, 1.0 C, 2.0 C, or 3.0 C in order in each process. At this time, the lower limit voltage was set to 3.0 V. In addition, between each discharging, CC-charging was performed again at 3.0 mA to 4.2 V, and the next CC-discharging was performed at the next discharging rate after the charging was completed. The ratio of the discharge capacity at a discharging rate of 3.0 C to the value of the discharge capacity at a discharging rate of 0.1 C, which was obtained as described above, was calculated as rate characteristics (%) and used as an index of the rate characteristics. When the discharge current is increased, the voltage drop due to the internal resistance is increased and the discharge capacity tends to be decreased. Therefore, as the value of the rate characteristics is higher, the rate characteristics of the lithium secondary battery is excellent. The results are shown in Table 8.

**[Table 8]**

| | | Classification | Example 63 | Example 64 | Example 65 | Example 66 |
|---|---|---|---|---|---|---|
| Solvent (type: % by volume) | Fluorine solvent | First | TTFE:80 | - | - | - |
| | | Second | - | TFEE:80 | TFPNE:80 | TFEE:80 |
| | Ether solvent | Chain-like | 1,2-DMP:20 | 1,2-DMP:20 | 1,2-DMP:20 | 1,2-DMP:10 |
| | | Linear | - | - | - | TGM:10 |
| Lithium salt (type: concentration (M)) | | | FSI:1.OM | FSI:1.0M | FSI:1.0M | FSI:1.0M |
| Characteristics | | Capacity (mAh) | 68 | 67 | 68 | 68 |
| | | Rate characteristics (%) | as | 89 | 82 | 87 |
| | | Cycle (times) | 151 | 155 | 149 | 147 |
| | | Volume expansion rate (%) | 28 | 31 | 18 | 21 |
| | | Classification | Example 67 | Example 68 | Example 69 | Example 70 |
| Solvent (type: % by volume) | Fluorine solvent | First | - | - | TTFE:40 | - |
| | | Second | TFEE:80 | TFEE:80 | TFEE:40 | TFEE:40 TFPNE:40 |
| | Ether solvent | Chain-like | 2,2-DMP:20 | 2,2-DMB:20 | 1,2-DMP:20 | 1,2-DMP:15 |
| | | Linear | - | - | - | DME:5 |
| Lithium salt (type: concentration (M)) | | | FSI:1.OM | FSL1.0M | FSI:1.0M | FSI:1.0M |
| Characteristics | | Capacity (mAh) | 67 | 69 | 68 | 68 |
| | | Rate characteristics (%) | 80 | 87 | 84 | 88 |
| | | Cycle (times) | 143 | 148 | 158 | 170 |
| | | Volume expansion rate (%) | 27 | 24 | 22 | 24 |
| | | Classification | Comparative Example 3 | Comparative Example 4 | | |
| Solvent (type: % by volume) | Fluorine solvent | First | TTFE:80 | - | | |
| | | Second | - | - | | |
| | Ether solvent | Chain-like | - | - | | |
| | | Linear | DME:20 | DME:100 | | |
| Lithium salt (type: concentration (M)) | | | FSI:1.OM | FSL1.0M | | |
| Characteristics | | Capacity (mAh) | 65 | 45 | | |
| | | Rate characteristics (%) | 80 | 35 | | |
| | | Cycle (times) | 158 | 12 | | |
| | | Volume expansion rate (%) | 40 | 46 | | |

In Table 8, "-" means that the corresponding component was not contained.

From Table 8, in Examples 63 to 70 in which an electrolytic solution containing the chain-like ether compound that was free of a fluorine atom and had a branched chain and containing the fluorine compound having a monovalent group represented by Formula (A) or Formula (B) was used, as compared with Reference Comparative Example 3 and Comparative Example 4 in which the electrolytic solution was not used, it was found that excellent cycle characteristics and low volume expansion rate were exhibited, that is, the cycle characteristics and the safety were excellent.

### [Reference Test Example 1]

As a reference example, a lithium ion battery was produced by using a negative electrode in which a 10 µm electrolytic Cu foil was supported with graphite (active material: 90% by mass, conductive aid: 2% by mass, binder: 8% by mass) containing 10% by mass of SiO as a negative electrode active material. The separator and the positive electrode were the same as in Test Example 1. Lithium ion batteries of Reference Examples 1 to 3 were produced so that the composition of each of the electrolytic solutions had the composition shown in Table 9.

The lithium ion batteries produced as Reference Examples 1 to 3 were subjected to various measurements in the same manner as in Test Example 2. The results are shown in Table 9.

**[Table 9]**

| | | Classification | Reference Example 1 | Reference Example 2 | Reference Example 3 |
|---|---|---|---|---|---|
| Solvent (type: % by volume) | Fluorine solvent | First | - | - | - |
| | | Second | - | - | TFEE:60 |
| | Ether solvent | Chain-like | 1,2-DMP:50 | - | 2,2-DMP:40 |
| | | Linear | DME:50 | DME:100 | - |
| Lithium salt (type: concentration (M)) | | | FSI:1.0M | FSI:1.0M | FSI:1.0M |
| Characteristics | | Capacity (mAh) | 39 | 32 | 2 |
| | | Rate characteristics (%) | NA | 0 | None |
| | | Cycle (times) | 15 | 2 | 1 |
| | | Volume expansion rate (%) | 44 | 57 | None |

In Table 9, "-" indicates that the corresponding component was not contained, "NA" indicates a state in which the value fluctuated wildly during the measurement of the rate characteristics, so that the rate characteristics could not be measured stably, and "None" indicates that the measurement was not performed.

Reference Example 1 in Table 9 was a lithium ion battery including a negative electrode having a negative electrode active material, but even in a case of using the electrolytic solution containing the chain-like ether compound that was free of a fluorine atom and had a branched chain, it was found that the volume expansion rate was generally larger than that of the examples described in Table 8. In addition, in Reference Example 2 which was also the lithium ion battery, the same electrolytic solution was used as in Comparative Example 4, and it was found that the number of cycles was smaller than that of Comparative Example 4 and the volume expansion rate was larger than that of Comparative Example 4. Furthermore, in Reference Example 3 which was also the lithium ion battery, the electrolytic solution containing both the fluorine compound and the chain-like ether compound described above was used, but it was found that the capacity and the number of cycles were lower than those of Examples 63 to 70.

From the above-described reference examples, it is suggested that there are required different electrolytic solution composition designs between the lithium secondary batteries in the embodiments and a lithium ion battery (LIB) including a negative electrode having a negative electrode active material in the prior art.

### Industrial Applicability

Because the lithium secondary battery of the present invention has high energy density and excellent cycle characteristics or safety, it has industrial applicability as a power storage device used in various applications.

### Reference Signs List

- 100, 200, 300: lithium secondary battery
- 110: positive electrode current collector
- 120: positive electrode
- 130: separator
- 140: negative electrode
- 210: positive electrode terminal
- 220: negative electrode terminal

## Claims

1. A lithium secondary battery comprising: a positive electrode; a negative electrode that is free of a negative electrode active material; and an electrolytic solution,
wherein the electrolytic solution contains
a lithium salt,
a fluorine compound having a monovalent group represented by Formula (A) or Formula (B), and
a chain-like ether compound that is free of a fluorine atom and has a branched chain, 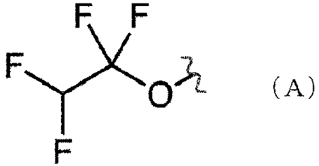 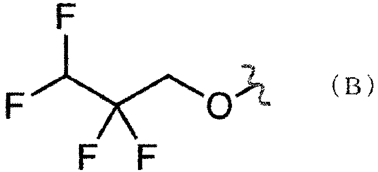 (in the formulae, a wavy line represents a bonding site in the monovalent group).

2. The lithium secondary battery according to claim 1, wherein the chain-like ether compound is a compound that includes 2 or more and 5 or less ether bonds.

3. The lithium secondary battery according to claim 1 or 2, wherein the chain-like ether compound has 4 or more and 10 or less carbon atoms.

4. The lithium secondary battery according to any one of claims 1 to 3, wherein the chain-like ether compound includes at least one selected from the group consisting of 1,1-dimethoxyethane, 1,2-dimethoxypropane, 2,2-dimethoxypropane, 1,3-dimethoxybutane, 1,2-dimethoxybutane, 2,2-dimethoxybutane, 2,3-dimethoxybutane, 1,2-diethoxypropane, 1,2-diethoxybutane, 2,3-diethoxybutane, and diethoxyethane.

5. The lithium secondary battery according to any one of claims 1 to 4, wherein the branched chain in the chain-like ether compound is an unsubstituted alkyl group having 1 or more and 10 or less carbon atoms.

6. The lithium secondary battery according to any one of claims 1 to 5, wherein LiN(SO₂F)₂ is contained as the lithium salt.

7. The lithium secondary battery according to any one of claims 1 to 6, wherein the electrolytic solution further contains a linear ether compound that is free of a fluorine atom and is free of a branched chain.

8. The lithium secondary battery according to claim 7, wherein the linear ether compound has 3 or more and 10 or less carbon atoms.

9. The lithium secondary battery according to claim 7 or 8, wherein the linear ether compound is a compound that includes 2 or more and 5 or less ether bonds.

10. The lithium secondary battery according to any one of claims 1 to 9, wherein an amount of the chain-like ether compound is 5% by volume or more and 50% by volume or less relative to an overall amount of solvent components in the electrolytic solution.

11. The lithium secondary battery according to any one of claims 1 to 10, wherein an amount of the fluorine compound is 30% by volume or more and 95% by volume or less relative to an overall amount of solvent components in the electrolytic solution.

12. A lithium secondary battery comprising: a positive electrode; a negative electrode that is free of a negative electrode active material; and an electrolytic solution,
wherein the electrolytic solution contains
a lithium salt,
a fluorine compound having a monovalent group represented by Formula (A) or Formula (B), and
an ether compound that is free of a fluorine atom, and
an amount of the fluorine compound is more than 50% by volume relative to an overall amount of solvent components in the electrolytic solution, 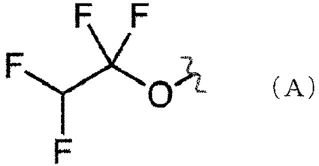 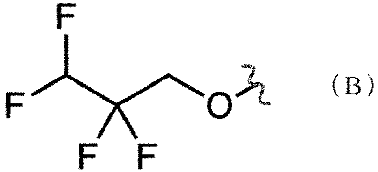 (in the formulae, a wavy line represents a bonding site in the monovalent group).

13. The lithium secondary battery according to any one of claims 1 to 12, wherein the fluorine compound has 3 or more and 10 or less carbon atoms.

## Amended claims

### Amended claims under Art. 19.1 PCT

1. A lithium secondary battery comprising: a positive electrode; a negative electrode that is free of a negative electrode active material; and an electrolytic solution,
wherein the electrolytic solution contains
a lithium salt,
a fluorine compound having a monovalent group represented by Formula (A) or Formula (B), and
a chain-like ether compound that is free of a fluorine atom and has a branched chain, 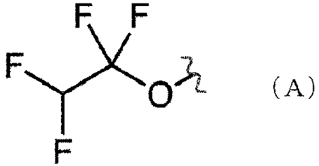 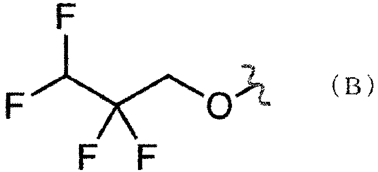 (in the formulae, a wavy line represents a bonding site in the monovalent group).

2. The lithium secondary battery according to claim 1, wherein the chain-like ether compound is a compound that includes 2 or more and 5 or less ether bonds.

3. The lithium secondary battery according to claim 1 or 2, wherein the chain-like ether compound has 4 or more and 10 or less carbon atoms.

4. The lithium secondary battery according to any one of claims 1 to 3, wherein the chain-like ether compound includes at least one selected from the group consisting of 1,1-dimethoxyethane, 1,2-dimethoxypropane, 2,2-dimethoxypropane, 1,3-dimethoxybutane, 1,2-dimethoxybutane, 2,2-dimethoxybutane, 2,3-dimethoxybutane, 1,2-diethoxypropane, 1,2-diethoxybutane, 2,3-diethoxybutane, and diethoxyethane.

5. The lithium secondary battery according to any one of claims 1 to 4, wherein the branched chain in the chain-like ether compound is an unsubstituted alkyl group having 1 or more and 10 or less carbon atoms.

6. The lithium secondary battery according to any one of claims 1 to 5, wherein LiN(SO₂F)₂ is contained as the lithium salt.

7. The lithium secondary battery according to any one of claims 1 to 6, wherein the electrolytic solution further contains a linear ether compound that is free of a fluorine atom and is free of a branched chain.

8. The lithium secondary battery according to claim 7, wherein the linear ether compound has 3 or more and 10 or less carbon atoms.

9. The lithium secondary battery according to claim 7 or 8, wherein the linear ether compound is a compound that includes 2 or more and 5 or less ether bonds.

10. The lithium secondary battery according to any one of claims 1 to 9, wherein an amount of the chain-like ether compound is 5% by volume or more and 50% by volume or less relative to an overall amount of solvent components in the electrolytic solution.

11. The lithium secondary battery according to any one of claims 1 to 10, wherein an amount of the fluorine compound is 30% by volume or more and 95% by volume or less relative to an overall amount of solvent components in the electrolytic solution.
